(19) Europäisches Patentamt
European Patent Office
Office européen des brevets

(11) **EP 2 925 584 B1**

## (12) EUROPÄISCHE PATENTSCHRIFT

(45) Veröffentlichungstag und Bekanntmachung des Hinweises auf die Patenterteilung:
**12.10.2016  Patentblatt 2016/41**

(21) Anmeldenummer: **13795169.5**

(22) Anmeldetag: **22.11.2013**

(51) Int Cl.:
***B60W 50/00*** *(2006.01)*

(86) Internationale Anmeldenummer:
**PCT/EP2013/003527**

(87) Internationale Veröffentlichungsnummer:
**WO 2014/086463 (12.06.2014 Gazette 2014/24)**

(54) **VERFAHREN ZUR VERKEHRSFLUSSBEDINGTEN ADAPTION VON ANHALTEVORGÄNGEN AN EIN SYNTHETISCH MODULIERTES GESCHWINDIGKEITSPROFIL ENTLANG EINER MIT EINEM FAHRZEUG GEFAHRENEN STRECKE SOWIE STEUERGERÄT ZUR DURCHFÜHRUNG DES VERFAHRENS**

METHOD FOR TRAFFIC-FLOW-CONDITIONED ADAPTATION OF STOPPING PROCESSES TO A SYNTHETICALLY MODULATED SPEED PROFILE ALONG A ROUTE TRAVELLED ALONG BY A VEHICLE AND CONTROL DEVICE FOR CARRYING OUT THE METHOD

PROCÉDÉ D'ADAPTATION, IMPOSÉE PAR LA FLUIDITÉ DU TRAFIC, DE PROCÉDURES D'ARRÊT À UN PROFIL DE VITESSE MODULÉ DE MANIÈRE SYNTHÉTIQUE LE LONG D'UN TRAJET PARCOURU PAR UN VÉHICULE ET APPAREIL DE COMMANDE PERMETTANT DE METTRE EN UVRE LE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2012  DE 102012023561**

(43) Veröffentlichungstag der Anmeldung:
**07.10.2015  Patentblatt 2015/41**

(73) Patentinhaber: **Audi AG**
**85045 Ingolstadt (DE)**

(72) Erfinder:
• **PAPAJEWSKI, Jens**
**86697 Unterhausen (DE)**
• **HAMACHER, Michael**
**86633 Neuburg (DE)**

• **TÖPLER, Felix**
**52070 Aachen (DE)**
• **UHRNER, Till**
**52062 Aachen (DE)**
• **FAHRENKROG, Felix**
**52062 Aachen (DE)**

(74) Vertreter: **Bauer, Dominik Michael**
**Audi AG**
**Patentabteilung**
**85045 Ingolstadt (DE)**

(56) Entgegenhaltungen:
**DE-A1-102008 010 558     DE-A1-102009 026 950**
**DE-A1-102010 047 080     US-A1- 2011 005 486**
**US-A1- 2011 184 622**

**Beschreibung**

Die vorliegende Erfindung betrifft ein Verfahren zur verkehrsflussbedingten Adaption von Anhaltevorgängen an ein synthetisch moduliertes Geschwindigkeitsprofil entlang einer mit einem Fahrzeug gefahrenen Strecke sowie ein Steuergerät zur Durchführung des Verfahrens.

Bezüglich der Motorsteuerung oder Betriebsstrategie von Kraftfahrzeugen, insbesondere von elektrifizierten Fahrzeugen oder (Plug-In) Hybrid-Fahrzeugen werden derzeit ganz überwiegend aktuelle Sensordaten zur Steuerung des Antriebsstrangs verwendet.

Bei Plug-In Hybrid-Fahrzeugen erfolgt die Steuerung des Antriebsstrangs aufgrund der aktuellen Sensordaten nach heutigem Stand der Technik mittels eines Betriebsartenschalters, mit dem zwischen rein elektrischem Fahren und hybridischem Fahren umgeschaltet werden kann. Bei Konzepten mit Range-Extender ist darüber hinaus auch der Betriebsmodus "SOC-Erhaltung" (SOC = State of Charge) bekannt, in dem der Batterieladezustand erhalten wird.

Was bezüglich der Motorsteuerung oder Betriebsstrategie von Kraftfahrzeugen jedoch herkömmlicherweise nicht berücksichtigt wird, ist der gesamte geplante Streckenverlaufs einer Fahrt. Dies ist insoweit von Nachteil, als hierdurch keine optimale Anpassung der Motorsteuerung oder Betriebsstrategie an den geplanten Streckenverlauf vorgenommen werden kann.

Zur Überwindung dieses Nachteils sind verschiedene Verfahren entwickelt worden. So ist beispielsweise aus der DE 10 2008 035 944 A1 ein Verfahren zum Optimieren des Fahrbetriebs eines Kraftfahrzeugs unter Zugrundelegung mehrerer Parameter bekannt, wobei durch Vorgabe eines Fahrtziels eine Fahrtroute des Fahrzeugs ermittelt wird, mehrere unterschiedliche Streckenparameter, die für ein Streckenprofil der ermittelten Fahrtroute des Fahrzeugs zwischen dem geometrischen Ort oder einem Fahrtstartpunkt des Fahrzeugs und dem Fahrtziel charakteristisch sind, ermittelt werden, und wenigsten eine Fahrbedingung ermittelt wird, die für die ermittelte Fahrtroute des Fahrzeugs zwischen dem geometrischen Ort des Fahrzeugs oder dem Fahrtstartpunkt und dem Fahrtziel charakteristisch ist. Unter Berücksichtigung der Streckenparameter und der Fahrbedingung wird eine Soll-Fahrgeschwindigkeit des Fahrzeugs entlang der ermittelten Fahrtroute bestimmt, wobei die Fahrtroute in mehrere Segmente unterteilt wird und die Unterteilung der Fahrtroute in Segmente auf Grundlage der Streckenparameter und/oder der Fahrbedingung erfolgt.

Aus der DE 10 2007 036 794 A1 ist ein Verfahren und eine Vorrichtung zur Festlegung der Fahrstrategie eines Kraftfahrzeuges bekannt, wobei für eine vorgegebene Fahrroute ein Korridor für eine mögliche Soll-Fahrgeschwindigkeit mit einer oberen und einer unteren Geschwindigkeitsgrenze über die Fahrstrecke definiert wird.

Die DE 10 2008 010 558 A1 beschreibt eine Vorrichtung und ein Verfahren zum Betreiben einer Hybridantriebsvorrichtung eines Kraftfahrzeugs, die zumindest zwei unterschiedliche Antriebsaggregate, insbesondere eine Brennkraftmaschine und eine elektrische Maschine, aufweist, wobei für die Antriebsaggregate in Abhängigkeit einer Fahrstrecke eine Betriebsstrategie eingestellt wird, wobei die Fahrstrecke gefahren und mindestens ein Fahrprofil ermittelt und gespeichert und in Abhängigkeit des Fahrprofils die Betriebsstrategie bei einem Wiederbefahren der Fahrstrecke beeinflusst wird.

Aus der US 2011/0005486 A1 ist eine Fahrzeugsteuerungsvorrichtung für ein Fahrzeug bekannt, die automatisch einen Verbrennungsmotor eines Fahrzeugs stoppt, wenn eine vorbestimmte Stoppbedingung erfüllt ist, und den automatisch gestoppten Verbrennungsmotor startet, wenn eine vorbestimmte Startbedingung erfüllt ist. Eine Stoppstelle-Detektionseinheit ermittelt eine Stoppstelle, an der das Fahrzeug möglicherweise stoppt, während das Fahrzeug auf Basis von Karteninformationen fährt, die in einer Karteninformations-Speichereinheit gespeichert sind. Eine Reiseinformations-Steuereinheit speichert Reiseinformationen in einer Reiseinformations-Speichereinheit, die einen Zustand des Fahrzeugs, das an einer Stoppstelle hält, und einen Zustand des Fahrzeugs, das eine Stoppstelle passiert, umfasst. Eine Stoppbestimmungseinheit bestimmt auf Grundlage der in der Reiseinformations-Speichereinzeit gespeicherten Reiseinformationen, ob der Verbrennungsmotor gestoppt wird, wenn das Fahrzeug an einer Stoppstelle anhält.

In der DE 10 2010 047 080.5 A1 wird ein Verfahren zum Gewinnen eines Datensatzes vorgeschlagen, der die vorhergesagte Geschwindigkeit eines Fahrzeugs über eine Vielzahl von Streckenpunkten einer Route wiedergibt oder alternativ die Geschwindigkeit Zeitpunkten zuordnet, die bezüglich einer Fahrt auf der Route definiert sind. Der Datensatz ergibt in seiner Gesamtheit bei beiden Alternativen ein Geschwindigkeitsprofil.

Gemäß der DE 10 2010 047 080.5 A1 wird zunächst ein erster Datensatz bereitgestellt, der einer Vielzahl von Strecken oder (Teil-)Routen (möglichst auf einem vollständigen Straßennetz) Streckenpunkte zuordnet. Ferner wird ein zweiter Datensatz bereitgestellt, durch den eine Mehrzahl an Vorgängen definiert ist, wobei als definierende Größen zumindest eine Eingangsgeschwindigkeit und eine Ausgangsgeschwindigkeit vorgesehen sind (Manöverklassenmatrix). Es werden im Rahmen der Bereitstellung des zweiten Datensatzes vorzugsweise nur solche Vorgänge (Manöver) definiert, die jeweils gemäß ihrer Definition oder wenigstens in ähnlicher Form tatsächlich auftreten. Ein Vorgang kann dabei aus einer Mehrzahl von Teilvorgängen zusammengesetzt werden.

Gemäß der DE 10 2010 047 080.5 A1 erfolgt eine Auswahl einer vorbestimmten Route und zu der Route wird ein vorläufiges Geschwindigkeitsprofil der Fahrt eines bestimmten Fahrzeugs über die vorbestimmte Route ermittelt. Es erfolgt das Aufteilen der Route, insbesondere das vollständige Aufteilen der Route, in Streckenabschnitte, und zwar dergestalt, dass jedem Streckenabschnitt ein Vorgang (Manöver) aus den im zweiten Datensatz definierten Vorgängen zugeordnet wird.

Bevorzugt umfasst das Verfahren gemäß DE 10 2010 047 080.5 A1, dass eine Mehrzahl von Routen befahren wird und hierbei Messwerte zur Fahrzeuggeschwindigkeit an bestimmten Streckenpunkten gewonnen werden. Die sich in den Messwerten indirekt widerspiegelnde Erfahrung wird dann in direkter Weise dadurch sichtbar gemacht, dass eine Mehrzahl (aber bevorzugt eine endliche Zahl) von Vorgängen (Manöver) definiert wird, denen eine Eingangsgeschwindigkeit und eine Ausgangsgeschwindigkeit zugeordnet ist, wobei das Definieren aufgrund der gewonnenen Messwerte erfolgt.

In dem Datensatz zur Modulierung des Geschwindigkeitsprofils gemäß der DE 10 2010 047 080.5 A1 sind für alle Manöver sämtliche benötigten Informationen, wie z.B. Anfangs- und Endgeschwindigkeit enthalten.

Und die nicht vorveröffentlichte DE 10 2012 004 258.2 hat zum Gegenstand, wie für die verschiedenen Manöver (Manöverklassen) die Geschwindigkeits- und Beschleunigungswerte, welche in der Manöverklassenmatrix stehen, ermittelt werden.

Nach dem Stand der Technik existiert somit derzeit eine Optimierung der Motorsteuerung oder Betriebsstrategie für Fahrzeuge, wie beispielsweise elektrifizierte Fahrzeuge oder Plug-In Hybrid-Fahrzeuge, über eine Strecke hinweg lediglich auf Grundlage eines synthetisch modulierten Geschwindigkeitsprofils ohne Berücksichtigung des tatsächlichen Verkehrsgeschehens beim Befahren der ausgewählten Strecke.

Dies ist insoweit von Nachteil, als hierdurch das maximale Verbrauchspotential eines Fahrzeugs, insbesondere eines Plug-In Hybrid-Fahrzeugs, für den Kunden nicht nutzbar ist.

Es ist Aufgabe der vorliegenden Erfindung, diesen Nachteil des Stands der Technik zu überwinden. Diese Aufgabe wird gelöst durch das Verfahren gemäß Anspruch 1 sowie das Steuergerät gemäß Anspruch 7.

Demgemäß wird ein Verfahren zur verkehrsflussbedingten Adaption von Anhaltevorgängen an ein synthetisch moduliertes Geschwindigkeitsprofil entlang einer mit einem Fahrzeug gefahrenen Strecke vorgeschlagen, das folgende Schritte umfasst:

a) Auswählen einer Strecke auf Grundlage von in einem Datensatz gespeicherten Kartendaten,
b) Aufteilen der Strecke in Streckensegmente und Erzeugen eines synthetisch modulierten Geschwindigkeitsverlaufs für jedes Streckensegment,
c) Abfahren von wenigstens einem Teil der Strecke durch einen Fahrer mit dem Fahrzeug,
d) Erfassen, wie oft und wie lange das Fahrzeug beim Befahren von wenigstens einem Teil der ausgewählten Strecke in den befahrenen Streckensegmenten anhält, und
e) Adaption von wenigstens einem synthetisch modulierten Geschwindigkeitsverlauf für wenigstens ein Streckensegment an die erfassten Anhaltevorgänge.

Das erfindungsgemäße Verfahren ist dadurch gekennzeichnet, dass in Schritt b) jedem Streckensegment eine Manöverklasse zugeordnet wird, wobei die Manöverklassen auswählbar sind aus einer vorgegebenen Manöverklassenmatrix, in der eine Anzahl an Konstantfahrt-Manöverklassen, Beschleunigungs-Manöverklassen und Verzögerungs-Manöverklassen enthalten ist und für jede Manöverklasse wenigstens eine Eingangsgeschwindigkeit und eine Ausgangsgeschwindigkeit des Fahrzeugs enthalten ist, und wobei in der Manöverklassenmatrix für jede Manöverklasse weiter wenigstens eine Durchschnittsgeschwindigkeit oder Durchschnittsbeschleunigung des Fahrzeugs sowie ein Toleranzband für die Durchschnittsgeschwindigkeit oder Durchschnittsbeschleunigung in Abhängigkeit von der Anzahl, wie oft die Manöverklasse vorkommt, enthalten sind.

Durch das erfindungsgemäße Verfahren wird das synthetisch modulierte Geschwindigkeitsprofil, das auf einer theoretischen Annahme eines Fahrtverlaufs beruht, auf einfache und rasche Weise an das tatsächliche Verkehrsgeschehen und die damit verbundenen Anhaltevorgänge angepasst. Durch das erfindungsgemäße Verfahren können nach Beendigung der Fahrt für jedes betroffene Streckensegment die Anzahl der aufgetretenen Anhaltevorgänge und die durchschnittliche Anhaltedauer bestimmt werden. Durch die Adaption des synthetisch modulierten Geschwindigkeitsverlaufs für wenigstens ein Streckensegment kann gegebenenfalls auf einfache Weise auch eine Anpassung der Betriebsstrategie zumindest für den Rest der noch zu befahrenden Strecke vorgenommen werden.

Weiter ist es von Vorteil, wenn bei dem erfindungsgemäßen Verfahren, sofern für das Streckensegment, innerhalb dessen das Fahrzeug anhält, gemäß der Zuordnung der Manöverklasse zu dem Streckenabschnitt a) eine Konstantfahrt-Manöverklasse gegeben ist, die Anhaltedauer der Konstantfahrt-Manöverklasse, b) eine Verzögerungs-Manöverklasse gegeben ist, die Anhaltedauer der vor der Verzögerungs-Manöverklasse aufgetretenen Konstantfahrt-Manöverklasse, oder c) eine Beschleunigungs-Manöverklasse gegeben ist, die Anhaltedauer der nach der Beschleunigungs-Manöverklasse aufgetretenen Konstantfahrt-Manöverklasse zugeordnet wird.

Gemäß noch einer vorteilhaften Weiterbildung der Erfindung wird bei dem erfindungsgemäßen Verfahren die Anhaltedauer für jeden Anhaltevorgang in einem Zeitspeicher abgelegt und ein manöverklassenspezifischer Zähler für die Anhaltevorgänge um den Wert 1 erhöht. Damit können nach Beendigung der Fahrt für jede Konstantfahrt-Manöverklasse die Anzahl der aufgetretenen Anhaltevorgänge und die durchschnittliche Anhaltedauer bestimmt werden.

Die adaptierten Werte von wenigstens einem synthetisch modulierten Geschwindigkeitsverlauf für wenigstens ein Streckensegment können in vorteilhafter Weise für die prädiktive Betriebsstrategie für das Fahrzeug verwendet werden. Beispielsweise kann für den Fall, dass sich aufgrund der adaptierten Werte von wenigstens einem synthetisch modulierten Geschwindigkeitsverlauf für wenigstens ein Streckensegment ergibt, dass ein vorgebbarer Schwellenwert für eine energetische Relevanz überschritten wird, eine Neuberechnung der prädiktiven Betriebsstrategie für das Fahrzeug durchgeführt werden.

Weiter ist in vorteilhafter Weise vorgesehen, dass a) die adaptierten Werte für wenigstens ein Streckensegment für die Berechnung der prädiktiven Betriebsstrategie für wenigstens eine weitere ausgewählte Strecke verwendet werden, oder b) die adaptierten Werte für wenigstens ein Streckensegment nach Beendigung der Fahrt auf die ursprünglich vorgegebenen Wert zurückgesetzt werden und die Berechnung der prädiktiven Betriebsstrategie für eine weitere ausgewählte Strecke auf Grundlage der ursprünglich vorgegebenen Werte erfolgt.

Die vorliegende Erfindung umfasst auch ein Steuergerät für ein Fahrzeug, das dazu eingerichtet ist, eines der Verfahren gemäß den Ansprüchen 1 bis 6 durchzuführen.

Die vorliegende Erfindung wird anhand der beigefügten Zeichnungen näher erläutert.

Dabei zeigen:

Fig. 1:    Einen schematischen Ablauf des Verfahrens gemäß dem Oberbegriff von Anspruch 1;
Fig. 2:    Eine Definition eines Anhaltevorgangs.
Fig. 3:    Ein Beispiel für ein synthetisches Geschwindigkeitsprofil für eine ausgewählte Strecke;
Fig. 4:    Ein Beispiel für eine Rückrechnung des steten Geschwindigkeitsverlaufs in ein unstetes Profil bestehend ausschließlich aus konstanten Geschwindigkeiten;
Fig. 5:    Rohdaten, die aus dem überarbeiteten Profil gemäß Fig. 3 berechnet wurden;
Fig. 6:    Ein Beispiel für die Berechnung der Durchschnittsgeschwindigkeit;
Fig. 7:    Eine schematische Darstellung der Berechnung der durchschnittlichen Geschwindigkeit für ein Manöver mit konstanter Geschwindigkeit;
Fig. 8:    Einen Vergleich der "online" ermittelten aktuellen Geschwindigkeitswerte für Manöverklasse 3 zu den in der Manöverklassenmatrix hinterlegten Werten;
Fig. 9:    Einen Vergleich der "online" ermittelten aktuellen Geschwindigkeitswerte für Manöverklasse 3 zu den in der Manöverklassenmatrix hinterlegten Werten;
Fig. 10:    Ein Beispiel für eine Verschiebung der durchschnittlichen Geschwindigkeit und des Toleranzbandes durch den aktuellen Fahrstil;
Fig. 11:    Eine schematische Darstellung der Berechnung der durchschnittlichen Verzögerung für ein instationäres Manöver;
Fig. 12:    Einen ersten Vergleich von "online" ermittelten aktuellen Beschleunigungswerten für Manöverklasse 115 zu den in der Manöverklassenmatrix hinterlegten Werten;
Fig. 13:    Einen zweiten Vergleich von "online" ermittelten aktuellen Beschleunigungswerten für Manöverklasse 115 zu den in der Manöverklassenmatrix hinterlegten Werten;
Fig. 14:    Ein Beispiel für eine Verschiebung der durchschnittlichen Verzögerung und des Toleranzbandes durch den aktuellen Fahrstil;

Die Darstellungen in den Figuren sind rein schematisch und nicht maßstabsgerecht.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

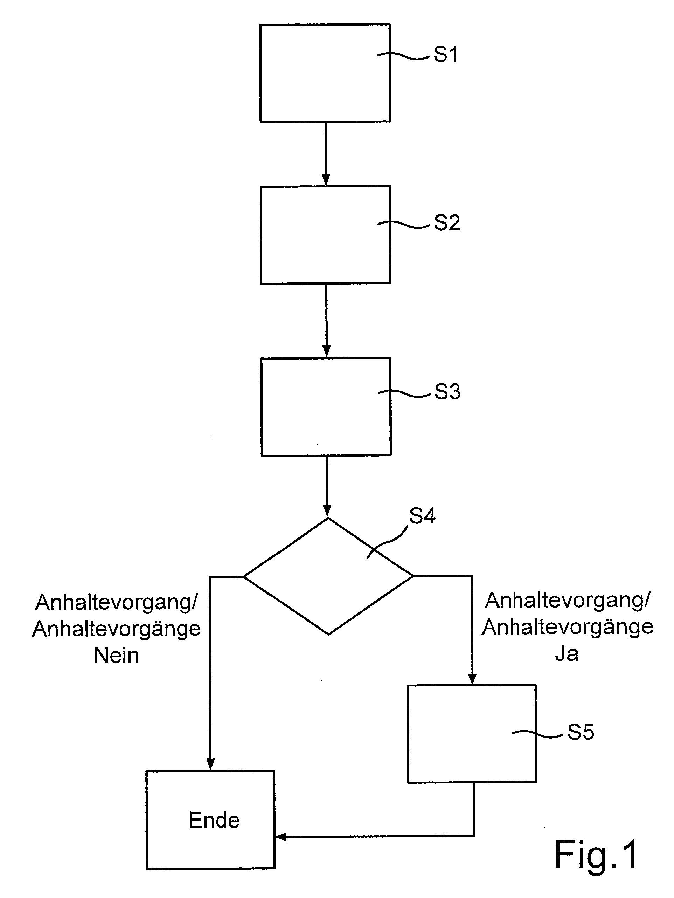

Wie in Fig. 1 gezeigt, sieht das erfindungsgemäße Verfahren vor, dass in einem Schritt S1 eine Strecke auf Grundlage von in einem Datensatz gespeicherten Kartendaten ausgewählt wird, in einem Schritt S2 die Strecke in Streckensegmente aufgeteilt und ein synthetisch modulierter Geschwindigkeitsverlauf für jedes Streckensegment erzeugt wird, in einem Schritt S3 wenigstens ein Teil der Strecke durch einen Fahrer mit dem Fahrzeug abgefahren wird, in einem Schritt S4 erfasst wird, wie oft und wie lange das Fahrzeug beim Befahren von wenigstens einem Teil der ausgewählten Strecke in den befahrenen Streckensegmenten anhält, und in einem Schritt S5 eine Adaption von wenigstens einem synthetisch modulierten Geschwindigkeitsverlauf für wenigstens ein Streckensegment an die erfassten Anhaltevorgänge vorgenommen wird.

Werden auf der abgefahren Strecke oder den abgefahrenen Streckenabschnitten keine Anhaltevorgänge festgestellt, erfolgt keine Adaption (bzw. eine Nicht-Adaption) eines synthetisch modulierten Geschwindigkeitsverlaufs für ein Streckensegment und endet das erfindungsgemäße Verfahren nach Schritt S4.

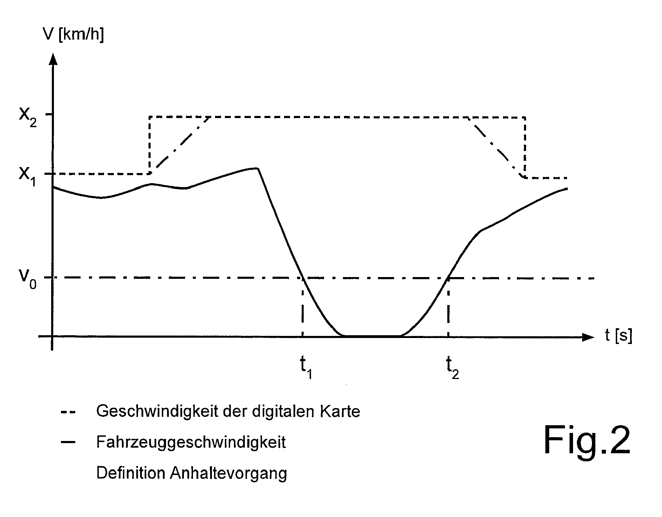

Anhaltevorgänge sind definiert als Bereiche, in denen der Wert des realen Geschwindigkeitsprofils unterhalb eines bestimmten Grenzwertes $v_0$ liegt. Abb. 2 zeigt einen beispielhaften Ausschnitt aus einem realen Geschwindigkeitsprofil, in dem ein Anhaltevorgang vorliegt.

Bei Unterschreiten des Grenzwerts $v_0$ wird die aktuelle Zeit $t_1$ zwischengespeichert. Wird der Grenzwert $v_0$ zum Zeitpunkt $t_2$ wieder überschritten, wird die Anhaltedauer durch die Subtraktion von $t_2 - t_1$ ermittelt.

Eine Voraussetzung für das vorliegende Verfahren ist, dass für eine ausgewählte Strecke ein synthetisch moduliertes Geschwindigkeitsprofil vorhanden ist bzw. erzeugt wird. Ein Beispiel dafür, wie ein solches Geschwindigkeitsprofil erzeugt werden kann, ist in der DE 10 2010 047 080.5 A1 beschrieben.

Bei dem in der DE 10 2010 047 080.5 A1 beschriebenen Verfahren wird - entsprechend Schritt b) des erfindungsgemäßen Verfahrens - jedem Streckensegment eine Manöverklasse zugeordnet, wobei die Manöverklassen auswählbar sind aus einer vorgegebenen Manöverklassenmatrix, in der eine Anzahl an Konstantfahrt-Manöverklassen, Beschleunigungs-Manöverklassen und Verzögerungs-Manöverklassen enthalten ist und für jede Manöverklasse wenigstens eine Eingangsgeschwindigkeit und eine Ausgangsgeschwindigkeit des Fahrzeugs enthalten ist. Aus den Manöverklassen für die einzelnen Streckensegmente kann ein synthetisch moduliertes Geschwindigkeitsprofil für die Strecke erstellt werden.

Das in der Patentanmeldung DE 10 2010 047 080.5 A1 beschriebene Verfahren berechnet aus den Vorausschaudaten der Navigation (Long-Range Prädiktive Streckendaten, kurz: LR-PSD) ein Geschwindigkeitsprofil, welches eine Manöverklassenmatrix (einen "Default"-Datensatz) berücksichtigt. Das Verfahren gemäß DE 10 2010 047 080.5 A1 kann somit zur Erzeugung eines synthetisch modulierten Geschwindigkeitsprofils, wie es für das vorliegende Verfahren verwendet wird, dienen. Insoweit wird ausdrücklich auf die Offenbarung in DE 10 2010 047 080.5 A1 verwiesen.

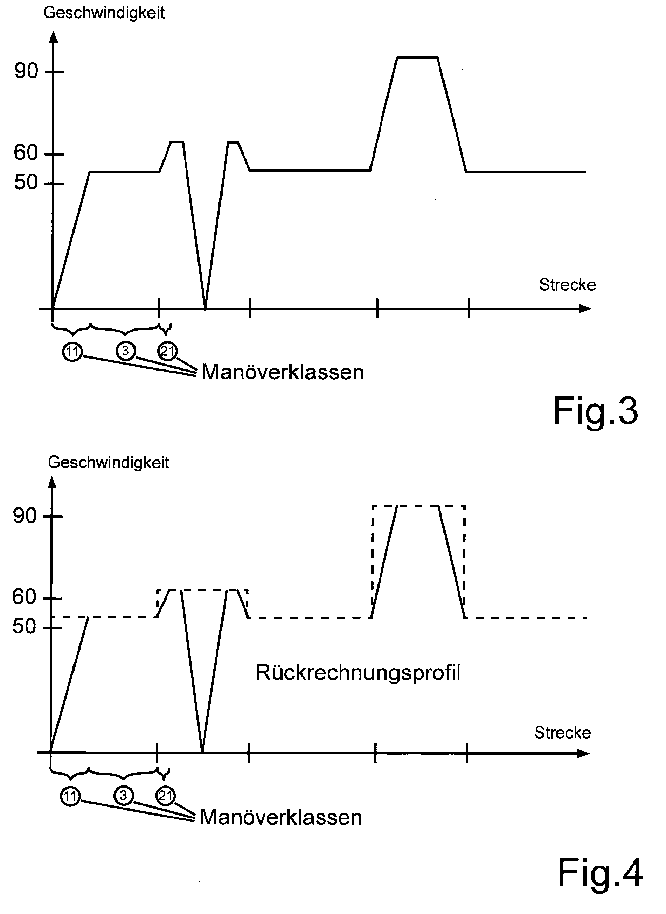

Auf Grundlage des Verfahrens gemäß DE 10 2010 047 080.5 A1 können Beschleunigungs- und Verzögerungsphasen für eine Strecke sowie weitere Events wie z.B. Anhaltevorgänge in das Profil eingearbeitet werden, sodass sich beispielsweise das in Fig. 3 gezeigte Geschwindigkeitsprofil ergibt.

Das Einfügen der Anhaltevorgänge basiert hierbei auf statistisch ermittelten Werten, sodass es in der Realität zu Abweichungen kommen kann, sowohl was die Position des Haltevorgangs als auch den Wert von Verzögerung, Beschleunigung und die Dauer der Stillstandsphasen betrifft.

Die nicht vorveröffentlichte DE 10 2012 004 258.2 hat zum Gegenstand, wie für die verschiedenen Manöver (Manöverklassen) die Geschwindigkeits- und Beschleunigungswerte, welche in der Manöverklassenmatrix stehen, ermittelt werden. Mittels der technischen Lehre von DE 10 2012 004 258.2 kann in der Manöverklassenmatrix für jede Manöverklasse weiter wenigstens eine Durchschnittsgeschwindigkeit oder Durchschnittsbeschleunigung des Fahrzeugs sowie ein Toleranzband für die Durchschnittsgeschwindigkeit oder Durchschnittsbeschleunigung in Abhängigkeit von der Anzahl, wie oft die Manöverklasse vorkommt, ermittelt werden.

Da die technische Lehre von DE 10 2012 004 258.2 in vorteilhafter Weise für die vorliegende Erfindung verwendet werden kann, ist nachfolgend der wesentliche Inhalt dieser nicht vorveröffentlichten Patentanmeldung zum besseren Verständnis der vorliegenden Erfindung eingefügt:

Das Verfahren gemäß DE 10 2012 004 258.2 zur Ermittlung einer Prädiktionsgüte um einen prädizierten Energieverbrauch eines Kraftfahrzeugs weist die folgenden Schritte auf:

a) Bereitstellen einer Mehrzahl von Manöverklassen, denen als definierende Größen zumindest eine Eingangsgeschwindigkeit und eine Ausgangsgeschwindigkeit eines Fahrzeugs zugeordnet ist;

b) Wiederholtes Ausführen des Manövers einer jeden Manöverklasse durch einen Fahrer mit dem Kraftfahrzeug und Ermitteln von Mittelwerten für Geschwindigkeit oder Geschwindigkeitsänderung in Abhängigkeit von der Anzahl der Wiederholungen des Manövers;

c) Wiederholung von Schritt b) zumindest bis für jedes Manöver ein statistisch aussagekräftiger Mittelwert für Geschwindigkeit oder Geschwindigkeitsänderung erhalten wird;

d) Berechnung eines Toleranzbereichs für die Mittelwerte eines jeden Manövers mit maximalen und minimalen Werten für die durchschnittliche Geschwindigkeit oder die durchschnittliche Beschleunigung in Abhängigkeit von der Anzahl der Wiederholungen eines jeden Manövers;

e) Auswahl einer vorbestimmten Route anhand eines zweiten Datensatzes, durch den eine Mehrzahl von Strecken mit einer Vielzahl von Streckensegmenten definiert ist;

f) Zuweisen von zumindest einer Manöverklasse zu jedem Streckensegment der Route;

g) Berechnung des prädizierten Energieverbrauchs für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver, und

h) Berechnung eines Toleranzbandes für den maximalen und minimalen Energieverbrauch durch Addition des Energieverbrauchs des Fahrzeugs für jedes entlang eines jeden Streckensegments durchgeführten Manövers unter Verwendung der in Schritt d) ermittelten maximalen und minimalen Mittelwerte für die Geschwindigkeit oder die Beschleunigung in Abhängigkeit von der Anzahl der Wiederholungen des Manövers, wobei durch Verwendung der Formel für die Gaußsche Fehlerfortpflanzung Abweichungen innerhalb von und/oder zwischen verschiedenen Manöverklassen kompensiert werden.

Gemäß einer ersten Weiterbildung des Verfahrens gemäß DE 10 2012 004 258.2 werden die in den Schritten b) bis d) erhaltenen Daten für jede Manöverklasse in einem ersten Datensatz gespeichert. Hierdurch kann sichergestellt werden, dass diese Daten dauerhaft für die weitere Nutzung zur Verfügung stehen.

Gemäß einer weiteren Weiterbildung des Verfahrens gemäß DE 10 2012 004 258.2 erfolgt eine Neuberechnung oder Veränderung der Betriebsstrategie des Fahrzeugs nur, wenn der tatsächliche Energieverbrauch des Fahrzeugs einen Wert außerhalb des berechneten Toleranzbandes aufweist. Solange sich der Fahrer bei einer realen Fahrt im prädizierten Toleranzband des Fahrprofils aufhält, ist keine Neuberechnung oder Änderung der Betriebsstrategie erforderlich. Der Kraftstoffverbrauch (beispielsweise elektrischer Strom, kohlenwasserstoffhaltiger Brennstoff, wie Benzin, Diesel, Erdgas, Flüssiggas, und/oder Wasserstoff) wird mit Hilfe der prädiktiven Betriebsstrategie auf der vorgegebenen Strecke minimiert.

Gemäß noch einer weiteren Weiterbildung des Verfahrens gemäß DE 10 2012 004 258.2 wird der erste und der zweite Datensatz in einem Speicher eines Kraftfahrzeugs abgelegt, erfolgt Schritt e) unter Zuhilfenahme einer Bedienvorrichtung in dem Kraftfahrzeug, und werden die Schritte b) bis d) und f) bis h) unter Zuhilfenahme einer Datenverarbeitungseinrichtung des Kraftfahrzeugs durchgeführt.

Gemäß noch einer weiteren Weiterbildung des Verfahrens gemäß DE 10 2012 004 258.2 wird auch die Neuberechnung oder Veränderung der Betriebsstrategie des Fahrzeugs durch eine Datenverarbeitungseinrichtung des Kraftfahrzeugs durchgeführt.

Eine noch weitere Weiterbildung des Verfahrens gemäß DE 10 2012 004 258.2 sieht vor, dass der in obigem Schritt e) bereitgestellte Datensatz auch eine Information über die Art von Straßen beinhaltet, und diese Information in obigem Schritt f) berücksichtigt wird.

Auch kann, wie dies gemäß einer noch weiteren Weiterbildung des Verfahrens gemäß DE 10 2012 004 258.2 vorgesehen ist, der in obigem Schritt e) bereitgestellte Datensatz auch Informationen über die Höhe von Streckensegmenten beinhalten und diese Information in obigem Schritt f) berücksichtigt werden.

Weiter beschreibt die DE 10 2012 004 258.2 eine Vorrichtung mit einem Speicher, einer Bedienvorrichtung und einer Datenverarbeitungseinrichtung, wobei

a) in dem Speicher eine Mehrzahl von Manöverklassen gespeichert ist, denen als definierende Größen zumindest eine Eingangsgeschwindigkeit und eine Ausgangsgeschwindigkeit eines Fahrzeugs zugeordnet ist;

b) in dem Speicher Mittelwerte für Geschwindigkeit oder Geschwindigkeitsänderung in Abhängigkeit von der Anzahl der Wiederholungen des Manövers gespeichert sind, die durch wiederholtes Ausführen des Manövers einer jeden Manöverklasse durch einen Fahrer mit dem Fahrzeug ermittelt wurden;

c) in dem Speicher für jedes Manöver ein statistisch aussagekräftiger Mittelwert für Geschwindigkeit oder Geschwindigkeitsänderung gespeichert ist, der durch die ausreichend häufige Wiederholung eines jeden Manövers erhalten wird;

d) in dem Speicher ein Toleranzbereich für die Mittelwerte eines jeden Manövers mit maximalen und minimalen Werten für die durchschnittliche Geschwindigkeit oder die durchschnittliche Beschleunigung in Abhängigkeit von der Anzahl der Wiederholungen eines jeden Manövers gespeichert ist;

e) in dem Speicher ein zweiter Datensatz, durch den eine Mehrzahl von Strecken mit einer Vielzahl von Streckensegmenten definiert ist, gespeichert ist;

f) mittels der Bedienvorrichtung eine vorbestimmte Route anhand des zweiten Datensatzes, durch den eine Mehrzahl von Strecken mit einer Vielzahl von Streckensegmenten definiert ist, auswählbar ist;

g) durch die Datenverarbeitungseinrichtung zumindest eine Manöverklasse zu jedem Streckensegment der Route zuweisbar ist;

h) durch die Datenverarbeitungseinrichtung der prädizierte Energieverbrauch für die Route durch Addition des prädizierten Energieverbrauchs des Fahrzeugs für jedes entlang eines jeden Streckensegments durchgeführten Manövers unter Verwendung des ermittelten, statistisch aussagekräftigen Mittelwerts für Geschwindigkeit oder Geschwindigkeitsänderung für jedes Manöver berechenbar ist, und

i) durch die Datenverarbeitungseinrichtung ein Toleranzband für den maximalen und minimalen Energieverbrauch durch Addition des Energieverbrauchs des Fahrzeugs für jedes entlang eines jeden Streckensegments durchgeführten Manövers unter Verwendung der maximalen und minimalen Mittelwerte für die Geschwindigkeit oder die Beschleunigung eines jeden Manövers in Abhängigkeit von der Anzahl der Wiederholungen des Manövers berechenbar ist, wobei durch Verwendung der Formel für die Gaußsche Fehlerfortpflanzung Abweichungen innerhalb von und/oder zwischen verschiedenen Manöverklassen kompensiert werden.

Eine erste Weiterbildung der Vorrichtung gemäß der DE 10 2012 004 258.2 sieht vor, dass die Datenverarbeitungseinrichtung weiter dazu eingerichtet ist, eine Neuberechnung oder Veränderung der Betriebsstrategie des Fahrzeugs vorzunehmen, wenn der tatsächliche Energieverbrauch des Fahrzeugs einen Wert außerhalb des vorhergesagten Toleranzbandes aufweist.

Gemäß einer weiteren Weiterbildung der Vorrichtung gemäß der DE 10 2012 004 258.2 beinhaltet der in dem Speicher gespeicherte Datensatz, durch den eine Mehrzahl von Strecken mit einer Vielzahl von Streckensegmenten definiert ist, auch eine Information über die Art von Straßen und ist die Datenverarbeitungseinrichtung dazu eingerichtet, diese Information in Punkt g) zu berücksichtigen.

Gemäß noch einer weiteren Weiterbildung der Vorrichtung gemäß der DE 10 2012 004 258.2 beinhaltet der in dem Speicher gespeicherte Datensatz, durch den eine Mehrzahl von Strecken mit einer Vielzahl von Streckensegmenten definiert ist, auch eine Information über die Höhe von Streckensegmenten und ist die Datenverarbeitungseinrichtung dazu eingerichtet, diese Information in Punkt g) zu berücksichtigen.

Die DE 10 2012 004 258.2 beschreibt schließlich auch ein Kraftfahrzeug mit der obigen Vorrichtung.

Gemäß DE 10 2012 004 258.2 wird durch die Ermittlung eines Toleranzbandes, die sogenannte Prädiktionsgüte, zusätzlich zu dem prädizierten Fahrprofil noch ein Toleranzband berechnet. Die Prädiktionsgüte liefert für die gesamte Route eine Aussage darüber, ob sich ein Fahrer auf einem auf stochastischer Auswertung beruhenden und natürlich vorkommenden Toleranzband aufhält. Die Betriebsstrategie für das Fahrzeug berücksichtigt bei der Optimierung genau dieses Toleranzband.

Solange sich der Fahrer bei der realen Fahrt im prädizierten Toleranzband des Fahrprofils aufhält, ist keine Neuberechnung oder Änderung der Betriebsstrategie erforderlich. Der Kraftstoffverbrauch wird hierdurch mit Hilfe der prädiktiven Betriebsstrategie auf der vorgegebenen Route minimiert.

Wie in der DE 10 2010 047 080.5 A1 beschrieben, lässt sich der Geschwindigkeitsverlauf einer jeden Route durch bestimmte Manöverklassen (in DE 10 2010 047 080.5 A1 als "Vorgänge" bezeichnet) beschreiben. Als Beispiele für derartige Manöverklassen seien hier erwähnt eine Beschleunigung von 50 auf 100 km/h, eine Konstantfahrt mit 70 km/h oder eine Verzögerung von 50 auf 30 km/h. Nach den bisherigen Erkenntnissen ist eine Anzahl von etwa 100 verschiedenen Manövern ausreichend, um den Geschwindigkeitsverlauf einer jeden beliebigen Route ausreichend genau beschreiben zu können. Jede Manöverklasse enthält als definierende Größen zumindest eine Eingangsgeschwindigkeit und eine Ausgangsgeschwindigkeit eines Fahrzeugs.

Gemäß der DE 10 2012 004 258.2 wird für jede Manöverklasse eine Auswertung durchgeführt, bei der die durchschnittliche Geschwindigkeit oder durchschnittliche Geschwindigkeitsänderung eines Fahrers mit einem Fahrzeug gespeichert wird. Die bei der Auswertung ermittelten Werte werden bevorzugt in einer sogenannten Manöverklassenmatrix gespeichert.

Der Mittelwert, d.h. der Wert für die durchschnittliche Geschwindigkeit oder durchschnittliche Geschwindigkeitsänderung schwankt bei einer geringen Anzahl an Manövern aufgrund der geringen Stichprobe stark. Mit zunehmender Anzahl der Manöver nähert sich dieser Mittelwert aber einem festen Wert an. Der stochastisch berechnete Beharrungswert (beispielsweise n=41) stellt die Mindestanzahl dar, die ein Manöver gefahren werden muss, um einen statistisch aussagekräftigen Mittelwert für Durchschnittsgeschwindigkeit bzw. -beschleunigung des Manövers zu erhalten.

Der Beharrungswert kann nach der Formel für den "Mindeststichprobenumfang" berechnet werden:

$$n_{Beharrung} = t_{0.995}^2 \cdot \frac{s_{a_\emptyset}^2}{b_a^2} \quad \text{bzw.} \quad n_{Beharrung} = t_{0.995}^2 \cdot \frac{s_{v_\emptyset}^2}{b_v^2}$$

Für die Mittelwerte wird gemäß DE 10 2012 004 258.2 ein Toleranzband ermittelt. Dadurch ergeben sich in Abhängigkeit der Anzahl, wie oft ein Manöver vorkommt, ein maximaler und ein minimaler Wert für die Durchschnittsbeschleunigung bzw. -geschwindigkeit. Die Berechnung der Grenzen erfolgt mit Hilfe des stochastischen Ansatzes der "Messunsicherheit". Diese Messunsicherheit gibt an, in welchem Bereich um den Mittelwert sich ein Wert mit einer zuvor festgelegten Wahrscheinlichkeit in Abhängigkeit der Messwerte befindet.

$$a_{\emptyset,\max}/a_{\emptyset,\min} = \bar{a}_\emptyset \pm \Delta a_\emptyset = \bar{a}_\emptyset \pm t_a \cdot \frac{s_{a_\emptyset}}{\sqrt{n}} = \bar{a}_\emptyset \pm t_a \cdot s_{\bar{a}_\emptyset}$$

bzw.

$$v_{\varnothing,\text{max}}/v_{\varnothing,\text{min}} = \bar{v}_\varnothing \pm \Delta v_\varnothing = \bar{v}_\varnothing \pm t_v \cdot \frac{s_{v_\varnothing}}{\sqrt{n}} = \bar{v}_\varnothing \pm t_v \cdot s_{\bar{v}_\varnothing}$$

Der Algorithmus interpretiert den Geschwindigkeitsverlauf einer beliebigen Route als Aneinanderreihung von Manöverklassen. Für jedes Segment einer Route kann so ein Durchschnittswert (von Geschwindigkeit bzw. Beschleunigung) sowie die stochastisch maximal zu akzeptierenden Abweichungen vorhergesagt werden. Mit den Durchschnittswerten (Mittelwert bei n = Beharrung) kann mittels der Gleichungen für die Fahrwiderstände ein Energieverbrauch über der Strecke prädiziert werden.

Mit den zu akzeptierenden Abweichungen und dem in der DE 10 2012 004 258.2 entwickelten stochastischen Ansatz, welcher auf der "Gaußschen Fehlerfortpflanzung" beruht, kann prädiziert werden, welche Abweichungen sich vom prädizierten Energieverbrauch ergeben können.

Die "Gaußsche Fehlerfortpflanzung" wird berechnet nach folgendem Ansatz:

$$\Delta f = \sqrt{\sum_{i=1}^{n}\left(\left.\frac{\delta f}{\delta x_i}\right|_{\bar{x}_i} \cdot \Delta x_i\right)^2}$$

wobei $x_i$ die einzelnen Messgrößen darstellen, die in die Endgröße einfließen, welche durch die Funktion f berechnet wird. Bei der Energieberechnung stellen die Beharrungswerte der Geschwindigkeit bzw. der Beschleunigung der einzelnen Manöverklassen die Messgrößen dar. Falls es sich bei der Manöverklasse um eine Beschleunigung oder Verzögerung handelt berechnet sich die Energie wie folgt:

$$\sum E = E_{MKx} + E_{MKy} + E_{MKz} + \cdots =$$

$$= \sum\left((k_{m_{rot}} + m_{Fzg}) \cdot a_{Beharrung} + m_{Fzg} \cdot g\right.$$
$$\left. \cdot \sin\left(tan^{-1}(\Delta h/\Delta s)\right) + F_0 + F_1 \cdot v_\varnothing + F_2 \cdot v_\varnothing^2\right) \cdot \Delta s \cdot \eta$$

$$= \sum\left((k_{m_{rot}} + m_{Fzg}) \cdot a_{Beharrung} + m_{Fzg} \cdot g\right.$$
$$\left. \cdot \sin\left(tan^{-1}\left(2 \cdot a_{Beharrung} \cdot \Delta h/(v_E^2 - v_A^2)\right)\right) + F_0 + F_1 \cdot v_\varnothing\right.$$
$$\left. + F_2 \cdot v_\varnothing^2\right) \cdot \left(\frac{v_E^2 - v_A^2}{2 \cdot a}\right) \cdot \eta$$

mit

$$\Delta s = \frac{v_E^2 - v_A^2}{2 \cdot a_{Beharrung}} \quad \text{aus} \quad v_E^2 = \sqrt{v_A^2 + 2 \cdot a_{Beharrung} \cdot \Delta s}$$

Als partielle Ableitung nach $a_{Beharrung}$ berechnet man:

$$\sum \frac{\delta E}{\delta a_{Beharrung}} =$$

$$= \sum \left(\left(\left(k_{m_{rot}} + m_{Fzg}\right) + m_{Fzg} \cdot g \right.\right.$$

$$\left. \cdot \cos\left(\tan^{-1}\left(\frac{2 \cdot a_{Beharrung} \cdot \Delta h}{v_E^2 - v_A^2}\right)\right)\right) \cdot \left(\frac{1}{1 + \left(\frac{2 \cdot a_{Beharrung} \cdot \Delta h}{v_E^2 - v_A^2}\right)^2}\right) \cdot \left(\frac{2 \cdot \Delta h}{v_E^2 - v_A^2}\right)$$

$$\cdot \left(\frac{v_E^2 - v_A^2}{2 \cdot a_{Beharrung}}\right)$$

$$+ \left(\left(k_{m\_rot} + m_{Fzg}\right) \cdot a_{Beharrung} + m_{Fzg} \cdot g \cdot \sin\left(\tan^{-1}\left(\frac{2 \cdot a_{Beharrung} \cdot \Delta h}{v_E^2 - v_A^2}\right)\right)\right)$$

$$\left. + F_0 + F_1 \cdot v_\emptyset + F_2 \cdot v_\emptyset^2\right) \cdot \left(-\frac{v_E^2 - v_A^2}{2 \cdot a^2}\right)\right) \cdot \eta$$

$$= \sum \left(\left(\left(k_{m_{rot}} + m_{Fzg}\right) + m_{Fzg} \cdot g \cdot \cos\left(\tan^{-1}\left(\frac{\Delta h}{\Delta s}\right)\right) \cdot \left(\frac{1}{1 + \left(\frac{\Delta h}{\Delta s}\right)^2}\right) \cdot \left(\frac{2 \cdot \Delta h}{v_E^2 - v_A^2}\right)\right) \cdot \Delta s\right.$$

$$+ \left(\left(k_{m\_rot} + m_{Fzg}\right) \cdot a_{Beharrung} + m_{Fzg} \cdot g \cdot \sin\left(\tan^{-1}\left(\frac{\Delta h}{\Delta s}\right)\right) + F_0 + F_1 \cdot v_\emptyset\right.$$

$$\left.\left. + F_2 \cdot v_\emptyset^2\right) \cdot \left(-\frac{v_E^2 - v_A^2}{2 \cdot a^2}\right)\right) \cdot \eta$$

Für eine Konstantfahrt berechnet sich die Energie nach

$$\sum E = E_{MKx} + E_{MKy} + E_{MKz} + \cdots =$$

$$= \sum \left( m_{Fzg} \cdot g \cdot \sin(\tan^{-1}(\Delta h/\Delta s)) + F_0 + F_1 \cdot v_{\text{Beharrung}} + F_2 \cdot v_{\text{Beharrung}}^2 \right) \cdot \Delta s \cdot \eta$$

Partiell abgeleitet nach $v_{\text{Beharrung}}$ ergibt sich:

$$\sum \frac{\delta E}{\delta v_{Beharrung}} = \left( 2 \cdot F_2 \cdot v_{Beharrung} + F_1 \right) \cdot \Delta s \cdot \eta$$

Die möglichen Abweichungen des prädizierten Gesamtenergieverbrauchs $\Sigma E$ werden anschließend aus den Einzeltermen für die Manöverklassen berechnet:

$$\Delta \sum E = \sqrt{ \sum \frac{\delta E}{\delta a_{Beharrung}} \Bigg|_{a_{Beharrung}} \cdot \Delta a_{\varnothing} + \sum \frac{\delta E}{\delta v_{Beharrung}} \Bigg|_{v_{Beharrung}} \cdot \Delta v_{\varnothing} }$$

Die Auswertung erfolgt schrittweise, das heißt nach jeder Manöverklasse wird ein neuer Term addiert. Den Wert für die Messunsicherheit $\Delta a_{\varnothing}$ bzw. $\Delta v_{\varnothing}$ erhält man in Abhängigkeit von der Anzahl der Manöverklasse.

Solange eine Manöverklasse bei der Fahrt nur einmal vorkommt, verwendet man den Wert für n=1. Sobald die Manöverklasse ein zweites Mal vorkommt, wird bei beiden Termen der Wert für n=2 verwendet, der Wert für die Messunsicherheit und damit die prädizierte Abweichung wird dadurch kleiner. Dadurch wird beachtet, dass sich der Mittelwert für die Beschleunigung bzw. Geschwindigkeit einer Manöverklasse mit steigender Anzahl immer mehr dem Beharrungswert annähert. Auf die Realität übertragen bedeutet das, dass der Fahrer statistisch gesehen bei einer Fahrt aufgrund äußerer und innerer Einflüsse, wie etwa Verkehrsstau oder Eile, wechselweise stärker oder schwächer beschleunigt. Dies gleicht sich jedoch umso mehr aus, je häufiger er diese Beschleunigung durchführt. Zusätzlich wird durch die quadratische Addition der Formel für die Gaußsche Fehlerfortpflanzung noch beachtet, dass sich auch Abweichungen innerhalb von und/oder zwischen verschiedenen Manöverklassen gegenseitig kompensieren. Durch diesen Ansatz gemäß DE 10 2012 004 258.2 steigen die zu tolerierenden Abweichungen über die Strecke nur geringfügig an, bisweilen wird das Toleranzband durch die Kompensation sogar schmaler.

Durch den oben beschriebenen Ansatz kann somit ein Toleranzband, die sogenannte Prädiktionsgüte, um den prädizierten Energieverbrauch gelegt werden. Die Abweichungen von dem prädizierten Energieverbrauch, die innerhalb des Toleranzbandes des erfindungsgemäßen Ansatzes liegen, können toleriert werden und erfordern keine Neuberechnung oder Veränderung der Betriebsstrategie.

(Ende der Wiedergabe des wesentlichen Inhalts der nicht vorveröffentlichten Patentanmeldung DE 10 2012 004 258.2)

Durch das erfindungsgemäße Verfahren erfolgt eine Adaption eines synthetisch modulierten Geschwindigkeitsprofils an den tatsächlichen Ablauf einer Fahrt entlang einer ausgewählten Strecke. Die bei einer Fahrt erzeugten adaptierten Werte von wenigstens einem synthetisch modulierten Geschwindigkeitsverlauf für wenigstens ein Streckensegment können in vorteilhafter Weise für die prädiktive Betriebsstrategie für das Fahrzeug verwendet werden.

Beispielsweise kann für den Fall, dass sich aufgrund der adaptierten Werte von wenigstens einem synthetisch modulierten Geschwindigkeitsverlauf für wenigstens ein Streckensegment ergibt, dass ein vorgebbarer Schwellenwert für eine energetische Relevanz überschritten wird, eine Neuberechnung der prädiktiven Betriebsstrategie für das Fahrzeug durchgeführt werden.

Für den Schwellenwert bestehen keine besonderen Beschränkungen und eine "energetische Relevanz" kann zum Beispiel angenommen werden, wenn der Energieverbrauch für die ausgewählte Strecke aufgrund der tatsächlich vorkommenden Anhaltevorgänge um 1, 2, 3, 4, 5, 6, 7, 8, 9, 10, 15 oder 20 % über oder unter dem liegt, der aufgrund der "default" Werte in der Manöverklassenmatrix für eine ausgewählte Strecke vorherberechnet wurde.

Die adaptierten Werte für wenigstens ein Streckensegment können beispielsweise a) für die Berechnung der prädiktiven Betriebsstrategie für wenigstens eine weitere ausgewählte Strecke verwendet werden oder b) nach Beendigung der Fahrt auf die ursprünglich vorgegebenen Wert zurückgesetzt werden. Im letzteren Fall erfolgt dann die Berechnung der prädiktiven Betriebsstrategie für eine weitere ausgewählte Strecke auf Grundlage der ursprünglich vorgegebenen Werte.

Die Option a) kann beispielsweise dann zu einer realitätsnahen Vorausberechnung des erforderlichen Energiebedarfs für das Befahren einer ausgewählten Stecke und damit eine Berechnung einer möglichst optimalen Betriebsstrategie dienen, wenn eine weitere Strecke mit einem ähnlichen Streckenprofil (Anteile an innerstädtischen Straßen, Landstraßen, Autobahnen, etc.) und einer ähnlichen Anzahl der einzelnen, aus den Karten-Daten ableitbaren Manöverklassen ausgewählt wird. Auch kann hierbei die Tageszeit, zu der die weitere Strecke befahren werden soll, mit der Tageszeit verglichen werden, zu der die vorherige Strecke befahren wurde (z.B. beide Strecken werden während des Berufsverkehrs abgefahren). In solchen Fällen kann erwartet werden, dass die Anzahl und die Dauer der Anhaltevorgänge für jede Konstantfahrt-Manöverklasse bei beiden Strecken ähnlich sein wird, so dass auch die Auswirkung der Anhaltevorgänge in Bezug auf deren energetische Relevanz ähnlich sein wird.

In anderen Fällen, beispielsweise bei der Auswahl einer weiteren Strecke mit einem von der ersten Strecke deutlich verschiedenen Streckenprofil, einem Wechsel des Fahrers oder der Fahrt einer weiteren Strecke zu einer Zeit, bei der ein anderes Verkehrsaufkommen zu erwarten ist, als bei der Befahrung der ersten Strecke, wird es oftmals von Vorteil sein, die obige Option b) zu wählen.

Es ist von Vorteil, wenn die adaptierten Werte als Offset und nicht als Absolutwert erfasst werden. Hierdurch kann beispielsweise die Manöverklassenmatrix wieder auf die "Default"-Bedatung resettet und das Erlernte verworfen werden, wenn erkannt wird, dass das Erlernte fehlerhaft oder überholt ist.

Bei der Speicherung von Absolutwerten müsste die "Default"-Bedatung überschrieben werden und es wäre keine Resetierung der Datenbasis möglich. Oder es wäre eine Resetierung der Datenbasis nur durch separate Abspeicherung der Default-Manöverklassenmatrix möglich, was jedoch doppelten Speicherbedarf (beispielsweise in einem Steuergerät) verursacht. Je nach Anwendungsfall können erfindungsgemäß jedoch beide Verfahren zu Anwendung kommen (Speicherung eines Offsets oder von Absolutwerten; mit und ohne separate Abspeicherung der Default-Manöverklassenmatrix).

Die vorliegende Erfindung umfasst auch ein Steuergerät für ein Fahrzeug, das dazu eingerichtet ist, das erfindungsgemäße Verfahren oder eine seiner vorteilhaften Weiterbildungen durchzuführen. Da sich die für das Steuergerät erforderlichen Komponenten, deren Funktion und Zusammenwirken für einen Fachmann aus der Schilderung des erfindungsgemäßen Verfahrens und seiner vorteilhaften Weiterbildungen ohne Weiteres ergeben, braucht diesbezüglich hier nicht näher darauf eingegangen zu werden.

Das erfindungsgemäße Steuergerät kann beispielsweise eine Speichereinrichtung, eine Bedieneinrichtung, eine Datenverarbeitungseinrichtung sowie eine Messdatenerfassungseinrichtung aufweisen, wobei

a) mittels der Bedienvorrichtung eine Strecke auf Grundlage von Kartendaten auswählbar ist, wobei die Kartendaten entweder in der Speichereinrichtung gespeichert sind oder auf Daten eines Navigationssystems beruhen;
b) mittels der Datenverarbeitungseinrichtung die Strecke in Streckensegmente aufgeteilt und ein synthetisch modulierter Geschwindigkeitsverlauf für jedes Streckensegment berechnet werden kann;
c) mittels der Messdatenerfassungseinrichtung erfasst werden kann, wie oft und wie lange das Fahrzeug beim Befahren von wenigstens einem Teil der ausgewählten Strecke in den befahrenen Streckensegmenten anhält; und
e) mittels der Datenverarbeitungseinrichtung in der Speichereinrichtung die Anzahl der aufgetretenen Anhaltevorgänge und die durchschnittliche Anhaltedauer gespeichert oder wenigstens ein synthetisch modulierter Geschwindigkeitsverlauf für wenigstens ein Streckensegment an die erfassten Anhaltevorgänge adaptiert werden kann.

Weiter ist das Steuergerät auch dazu eingerichtet, jedem Streckensegment eine Manöverklasse zuordnen zu können, wobei die Manöverklassen auswählbar sind aus einer vorgegebenen, in der Speichereinrichtung gespeicherten Manöverklassenmatrix, in der eine Anzahl an Konstantfahrt-Manöverklassen, Beschleunigungs-Manöverklassen und Verzögerungs-Manöverklassen enthalten ist und für jede Manöverklasse wenigstens eine Eingangsgeschwindigkeit und eine Ausgangsgeschwindigkeit des Fahrzeugs enthalten ist.

Auch ist das Steuergerät derart eingerichtet, dass in der Manöverklassenmatrix für jede Manöverklasse weiter wenigstens eine Durchschnittsgeschwindigkeit oder Durchschnittsbeschleunigung des Fahrzeugs sowie ein Toleranzband für die Durchschnittsgeschwindigkeit oder Durchschnittsbeschleunigung in Abhängigkeit von der Anzahl, wie oft die Manöverklasse vorkommt, enthalten sind.

Weiter kann das Steuergerät dazu eingerichtet sein, dass sofern für das Streckensegment, innerhalb dessen das Fahrzeug anhält, gemäß der Zuordnung der Manöverklasse zu dem Streckenabschnitt a) eine Konstantfahrt-Manöverklasse gegeben ist, die Anhaltedauer der Konstantfahrt-Manöverklasse, b) eine Verzögerungs-Manöverklasse gegeben ist, die Anhaltedauer der vor der Verzögerungs-Manöverklasse aufgetretenen Konstantfahrt-Manöverklasse, oder c) eine Beschleunigungs-Manöverklasse gegeben ist, die Anhaltedauer der nach der Beschleunigungs-Manöverklasse aufgetretenen Konstantfahrt-Manöverklasse zugeordnet wird.

Auch kann das Steuergerät dazu eingerichtet sein, die Anhaltedauer für jeden Anhaltevorgang in die Speichereinrichtung abzulegen und einen manöverklassenspezifischen Zähler für die Anhaltevorgänge um den Wert 1 zu erhöhen.

Das Steuergerät kann in vorteilhafter Weise auch dazu eingerichtet sein, die adaptierten Werte von wenigstens einem synthetisch modulierten Geschwindigkeitsverlauf für wenigstens ein Streckensegment für die prädiktive Betriebsstrategie für das Fahrzeug zu verwenden. So kann durch das Steuergerät beispielsweise für den Fall, dass sich aufgrund der adaptierten Werte von wenigstens einem synthetisch modulierten Geschwindigkeitsverlauf für wenigstens ein Streckensegment ergibt, dass ein vorgebbarer Schwellenwert für eine energetische Relevanz überschritten wird, eine Neuberechnung der prädiktiven Betriebsstrategie für das Fahrzeug durchgeführt werden.

Weiter kann vorgesehen sein, dass beispielsweise mittels der Bedieneinrichtung auswählbar ist, ob die adaptierten Werte für wenigstens ein Streckensegment a) für die Berechnung der prädiktiven Betriebsstrategie für wenigstens eine weitere ausgewählte Strecke verwendet werden, oder b) nach Beendigung der Fahrt auf die ursprünglich vorgegebenen Wert zurückgesetzt werden und die Berechnung der prädiktiven Betriebsstrategie für eine weitere ausgewählte Strecke auf Grundlage der ursprünglich vorgegebenen Werte erfolgt.

Des Weiteren kann in vorteilhafter Weise vorgesehen sein, dass durch die im Steuergerät vorgesehen Datenverarbeitungseinrichtung eine Anpassung der Werte für eine Manöverklasse durch Eintragung von entsprechenden Offset-Werten in die Speichereinrichtung erfolgt.

Neben der Erfassung, wie oft und wie lange ein Fahrzeug entlang einer ausgewählten Strecke anhält, kann es insbesondere zur Berechnung einer optimalen Betriebsstrategie für ein Fahrzeug wenigstens für die ausgewählte Strecke von großem Vorteil sein, wenn zusätzlich auch eine Erfassung und Analyse des Fahrstils des Fahrers erfolgt. Daher kann das erfindungsgemäße Verfahren und das erfindungsgemäße Steuergerät gegebenenfalls in vorteilhafter Weise um die nachfolgend dargelegte Erfassung und Analyse des Fahrstils des Fahrers erweitert bzw. ergänzt werden.

Wie oben bereits erwähnt, existiert nach dem Stand der Technik derzeit eine Optimierung der Motorsteuerung oder Betriebsstrategie für Fahrzeuge, wie beispielsweise Plug-In Hybrid-Fahrzeuge, über eine Strecke hinweg lediglich auf Grundlage eines synthetisch modulierten Geschwindigkeitsprofils ohne Berücksichtigung des tatsächlichen Verkehrsgeschehens beim Befahren der ausgewählten Strecke. Auch erfolgt die Optimierung unter der Annahme, dass ein "Default"-Fahrer das Fahrzeug fährt, der mit "Default"-Werten alle Manöver der Strecke durchfährt.

Daher ist es von Vorteil, wenn neben der Erfassung von verkehrsflussbedingten Anhaltevorgängen auch eine fahrerspezifische Anpassung eines synthetisch modulierten Geschwindigkeitsprofils erfolgt.

Eine solche fahrerspezifische Anpassung kann beispielsweise dadurch erfolgen, dass

a) eine Strecke auf Grundlage von in einem Datensatz gespeicherten Kartendaten ausgewählt wird,

b) die Strecke in Streckensegmente aufgeteilt und eine Manöverklasse zu jedem Streckensegment zugeteilt wird, wobei die Manöverklassen auswählbar sind aus einer vorgegebenen Manöverklassenmatrix, in der für jede Manöverklasse wenigstens eine Eingangsgeschwindigkeit, ein Ausgangsgeschwindigkeit, eine Durchschnittsgeschwindigkeit oder Durchschnittsbeschleunigung des Fahrzeugs sowie ein Toleranzband für die Durchschnittsgeschwindigkeit oder Durchschnittsbeschleunigung in Abhängigkeit von der Anzahl, wie oft die Manöverklasse vorkommt, enthalten sind,

c) wenigstens ein Teil der Strecke durch einen Fahrer mit dem Fahrzeug abgefahren wird, wobei bei jedem durchfahrenen Streckensegment die tatsächliche Geschwindigkeit oder die tatsächliche Beschleunigung sowie die Anzahl, wie oft die Manöverklasse entlang der Strecke vorgekommen ist, erfasst wird,

d) ermittelt wird, ob die tatsächliche Geschwindigkeit oder die tatsächliche Beschleunigung bezogen auf die Anzahl, wie oft die Manöverklasse vorgekommen ist, außerhalb des für die Anzahl der Manöverklasse in der Manöverklassenmatrix vorgegebenen Toleranzbandes liegt, und

e) die in der Manöverklassenmatrix für die Manöverklasse enthaltene Durchschnittsgeschwindigkeit oder Durchschnittsbeschleunigung sowie das Toleranzband angepasst wird, sofern die tatsächliche Geschwindigkeit oder die tatsächliche Beschleunigung bezogen auf die Anzahl, wie oft die Manöverklasse vorgekommen ist, außerhalb des für die Manöverklasse in der Manöverklassenmatrix vorgegebenen Toleranzbandes liegt.

Wie oben bereits erwähnt, wird in der DE 10 2010 047 080.5 A1 ein Verfahren zum Gewinnen eines Datensatzes vorgeschlagen, der die vorhergesagte Geschwindigkeit eines Fahrzeugs über eine Vielzahl von Streckenpunkten einer Route wiedergibt oder alternativ die Geschwindigkeit Zeitpunkten zuordnet, die bezüglich einer Fahrt auf der Route definiert sind. Der Datensatz ergibt in seiner Gesamtheit bei beiden Alternativen ein Geschwindigkeitsprofil. Und die nicht vorveröffentlichte DE 10 2012 004 258.2 hat zum Gegenstand, wie für die verschiedenen Manöver (Manöverklassen) die Geschwindigkeits- und Beschleunigungswerte, welche in der Manöverklassenmatrix stehen, ermittelt werden. Für die nachfolgenden Ausführungen wird insoweit auf die DE 10 2010 047 080.5 A1 und auf die obigen Ausführungen bezüglich der DE 10 2012 004 258.2 Bezug genommen.

Die gemäß DE 10 2010 047 080.5 A1 und/oder DE 10 2012 004 258.2 hinterlegte Manöverklassenmatrix zur Modulierung des prädiktiven Geschwindigkeitsprofils bildet nur einen Durchschnittsfahrer ab. Durch einen selbstlernenden Algorithmus kann jedoch das individuelle Fahrerverhalten analysiert und in der Manöverklassenmatrix gespeichert werden. Bei energetischer Relevanz kann eine Neuberechnung der prädiktiven Betriebsstrategie ausgelöst werden.

Hierdurch ergibt sich der Vorteil, dass eine Wunschrestreichweite realisiert werden kann unter optimaler Nutzung von Fahrzeugen, insbesondere von Plug-In Hybrid-Fahrzeugen, bezüglich Verbrauch, Kosten und Kundenwunsch. Die prädiktive Betriebsstrategie berücksichtigt den Kundenwunsch optimal und adaptiert sich automatisch an das individuelle Fahrverhalten des Fahrers.

Hierbei kann es von Vorteil sein, wenn im obigen Schritt e) die Anpassung der Werte für eine Manöverklasse durch Eintragung von Offset-Werten in die Manöverklassenmatrix erfolgt. Die fahrstilabhängige Veränderung als Offset und nicht als Absolutwert in der Manöverklassenmatrix zu erfassen bietet den Vorteil, dass die Manöverklassenmatrix wieder auf die "Default"-Bedatung resettet und das Erlernte verworfen werden kann. Bei der Speicherung von Absolutwerten müsste die "Default"-Bedatung überschrieben werden und es wäre eine Resetierung der Datenbasis nur durch separate Abspeicherung der Default-Manöverklassenmatrix möglich, was jedoch doppelten Speicherbedarf verursacht.

Auch ist es von Vorteil, wenn bei einer Anpassung der Werte für wenigstens eine Manöverklasse die angepassten Werte für die prädiktive Betriebsstrategie für das Fahrzeug verwendet werden. Beispielsweise kann für den Fall, dass durch die Anpassung der Werte von wenigstens einer Manöverklasse ein vorgebbarer Schwellenwert für eine energetische Relevanz überschritten wird, eine Neuberechnung der prädiktiven Betriebsstrategie für das Fahrzeug durchgeführt werden.

Ebenso ist es vorteilhaft, wenn a) die angepassten Werte für die Berechnung der prädiktiven Betriebsstrategie für wenigstens eine weitere ausgewählte Strecke verwendet werden, oder b) die angepassten Werte in der Manöverklassenmatrix nach Beendigung der Fahrt auf die ursprünglich vorgegebenen Wert zurückgesetzt werden und die Berechnung der prädiktiven Betriebsstrategie für eine weitere ausgewählte Strecke auf Grundlage der ursprünglich vorgegebenen Werte erfolgt.

Gemäß obiger Option a) kann das Erlernte unter der Annahme, dass der Fahrer seinen bisherigen Fahrstil für die jeweiligen Manöverklassen beibehält, für die Berechnung einer prädiktiven Betriebsstrategie für wenigstens eine weitere ausgewählte Strecke verwendet werden. Oder es kann das bisher erlernte sofort für eine Neuberechnung der Betriebsstrategie oder der Motorsteuerung verwendet werden, wenn der Fahrer sich dazu entschließt, die ausgewählte Route zu verlassen und ein neues Ziel über eine geänderte Route anzufahren.

Da ein und derselbe Fahrer (z.B. durch Gemütsschwankungen, unterschiedlichen Zeitdruck, unterschiedliche Verkehrsdichte) bei verschiedenen Fahrten ein unterschiedliches Fahrverhalten aufweisen kann oder verschiedene Fahrer das gleiche Fahrzeug verwenden können, ist es oftmals von Vorteil, wenn die Daten für die verschiedenen Manöverklassen gemäß obiger Option b) auch wieder auf die "Default"-Werte zurückgesetzt werden können.

Weiter kann die vorliegende Erfindung ein Steuergerät für ein Fahrzeug umfassen, dass nicht nur die Verfahren gemäß den Ansprüchen 1 bis 6 durchzuführen vermag, sondern auch die oben dargelegten weiteren Verfahren zur fahrerspezifischen Anpassung eines synthetisch modulierten Geschwindigkeitsprofils.

Die Grundlage zur Erfassung des Fahrstils ist die kontinuierliche Auswertung des tatsächlich gefahrenen Geschwindigkeitsprofils während einer Fahrt.

Hierzu vergleicht der "online"-Geschwindigkeitsklassifikator des hier vorgestellten Verfahrens zur Erkennung des Fahrstils während der Fahrt das tatsächlich gefahrene Geschwindigkeitsprofil mit dem Profil aus den Vorausschaudaten der Navigation (Long-Range Prädiktive Streckendaten, durch LR-PSD abgekürzt). Die Vorausschaudaten werden fahrzeugintern aufbereitet (siehe auch Patentanmeldung DE 10 2010 047 080.5 A1) und an einen selbstlernenden Algorithmus übermittelt.

Wie oben bereits erwähnt, berechnet das in der Patentanmeldung DE 10 2010 047 080.5 A1 beschriebene Verfahren aus den Vorausschaudaten der Navigation (LR-PSD) ein Geschwindigkeitsprofil, welches einen "Default"-Datensatz berücksichtigt. So werden Beschleunigungs- und Verzögerungsphasen für einen "Default"-Fahrer sowie weitere Events wie z.B. Anhaltevorgänge in das Profil eingearbeitet, sodass sich beispielsweise das in Fig. 3 gezeigte Geschwindigkeitsprofil ergibt.

Das Einfügen der Anhaltevorgänge basiert auf statistisch ermittelten Werten, sodass es in der Realität zu Abweichungen kommen kann, sowohl was die Position des Haltevorgangs als auch den Wert von Verzögerung, Beschleunigung und die Dauer der Stillstandsphasen betrifft. Die eingefügten Beschleunigungs- und Verzögerungsvorgänge zwischen zwei Phasen konstanter Geschwindigkeit können ebenfalls Abweichungen, zum Beispiel durch den Fahrstil, zum realen Profil haben. Daher ist es notwendig, dass der "online"-Geschwindigkeitsklassifikator des hier beschriebenen Verfahrens das reale Profil mit den Rohdaten der Digitalkarte vergleicht. Die Rohdaten weisen ein unstetes Geschwindigkeitsprofil ohne Übergangsphasen zwischen Konstantfahrtmanövern auf.

Sofern die Rohdaten dem selbstlernenden Algorithmus im Fahrzeug nicht mehr zur Verfügung stehen, ist eine Rückrechnung aus dem nach dem Verfahren gemäß DE 10 2010 047 080.5 A1 berechneten Geschwindigkeitsprofil auf die ursprünglichen Vorausschaudaten der LR-PSD notwendig. Die Rückrechnung erfolgt mit Hilfe der Analyse der Phasen konstanter Geschwindigkeit. In Fig. 4 ist beispielhaft gezeigt, wie die Übergangsphasen durch eine Verlängerung der Konstantphasen überdeckt werden.

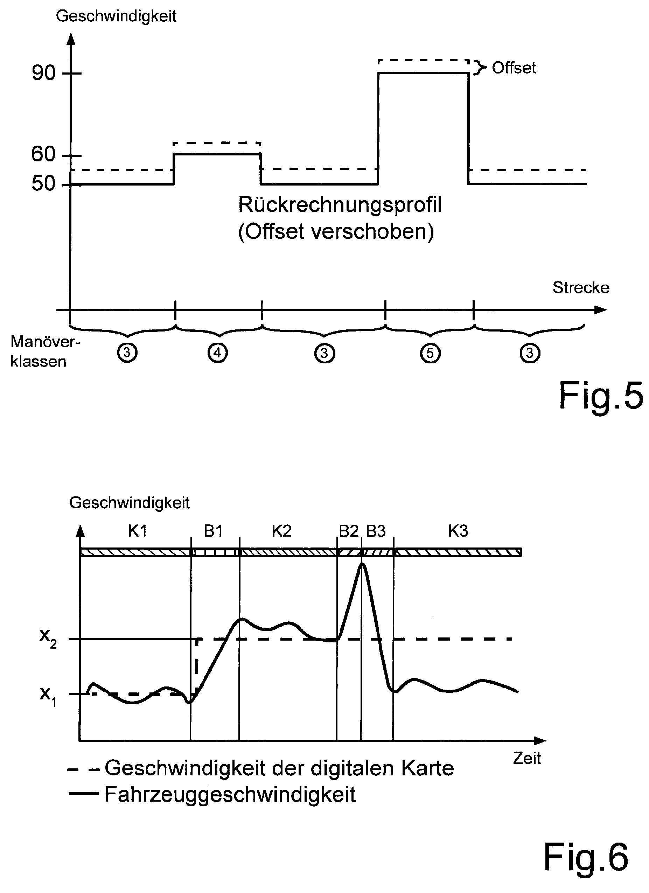

Das zurückgerechnete Profil wird zusätzlich noch um einen Geschwindigkeitsoffset verschoben. Damit wird die Geschwindigkeit an die tatsächlich vorliegende, gesetzliche Geschwindigkeitsbegrenzung angepasst. Es ergibt sich das in Fig. 5 gezeigte Profil mit der dazugehörigen Klassenverteilung, die ausschließlich aus Phasen konstanter Geschwindigkeit besteht.

Der "online"-Geschwindigkeitsklassifikator dient zur "online"-Auswertung und -Aufbereitung der Messdaten für die in einem späteren Schritt erfolgende fahrerspezifische Anpassung der Manöverklassenmatrix. Zu diesem Zweck werden vom "online"-Geschwindigkeitsklassifikator die aufgetretenen Manöverklassen bestimmt sowie die in Abhängigkeit der Manöverklassen bestimmte Durchschnittsgeschwindigkeit bzw. Durchschnittsbeschleunigung ermittelt. Zusätzlich wird ausgegeben, wie häufig die jeweilige Geschwindigkeitsklasse in der aktuellen Fahrt bisher aufgetreten ist. Als Eingangsgrößen dienen dem "online"-Geschwindigkeitsklassifikator dabei die aktuelle Fahrzeuggeschwindigkeit, die auf Grundlage der vom Navigationsgerät ausgegebenen Geschwindigkeit berechneten Manöverklassen und ein Triggersignal, welches zur richtigen Zuordnung bei der Mittelwertberechnung benötigt wird.

Grundsätzlich beinhaltet der "online"-Geschwindigkeitsklassifikator zwei wesentliche Funktionen, nämlich

- die Bestimmung der Manöverklasse, und
- die Bestimmung der charakterisierenden Werte für die zuvor detektierte Manöverklasse (Durchschnittswerte und Häufigkeit des Auftretens der Manöverklassen).

Diese Funktionen werden im Folgenden näher beschrieben.

Zur Bestimmung der Manöverklassen wird das Geschwindigkeitssignal verarbeitet und ausgewertet. Dazu wird zunächst das Signal mit Hilfe von verschiedenen Filtern für die weiteren Prozessschritte aufbereitet. Das Ziel bei diesem Vorgehen ist es, die Dynamik innerhalb des Geschwindigkeitssignals zu reduzieren, um so zu verhindern, dass die spätere Detektion von kleinen, nicht relevanten Änderungen im Geschwindigkeitssignal negativ beeinflusst wird. Als Filter können beispielsweise ein "moving average"-Filter und ein PT1-Filter verwendet werden. Allerdings ist auch die Verwendung anderer (komplexerer) Filter möglich. Entscheidend bei der Wahl der Filter ist lediglich, dass die gewünschte Signalqualität erreicht wird.

Die Bestimmung der Manöverklassen erfolgt anschließend auf Basis der Beschleunigung, die durch das Differenzieren des Geschwindigkeitssignals berechnet wird. Anschließend erfolgt die eigentliche Detektion der drei Grundklassen. Diese sind (i) Konstantfahrt, (ii) Beschleunigung und (iii) Verzögerung.

Hierzu wird die Beschleunigung mit Grenzwerten, die auf der im vorherigen Zeitschritt detektierten Grundklasse basieren, verglichen. Die Anpassung der Grenzwerte führt zu einer Art Hysterese. Diese bietet den Vorteil, dass ein unerwünschter, fortwährender Wechsel zwischen zwei Klassen vermieden wird.

Wenn der Wechsel zu einer neuen Grundklasse detektiert wird, wird außerdem die momentane Fahrzeuggeschwindigkeit ermittelt. Diese Geschwindigkeit stellt die Startgeschwindigkeit der jetzigen Grundklasse sowie die Endgeschwindigkeit der vorherigen Grundklasse dar. Damit kann nach Abschluss jeder Grundklasse deren Start- und Endgeschwindigkeit bestimmt werden.

Im letzten Schritt zur Bestimmung der Manöverklasse wird, basierend auf der gerade detektierten Start- und Endgeschwindigkeit, mittels eines Look-Up-Tables die dazugehörige Manöverklasse bestimmt. Die Zuordnung der Geschwindigkeiten zu den definierten Geschwindigkeiten der Manöverklassen erfolgt dabei nach dem "Nearest-Neighbor"-Verfahren.

Nach der Bestimmung der Manöverklasse erfolgt die Bestimmung der charakterisierenden Werte. Hierbei muss eine grundsätzliche Unterscheidung zwischen Beschleunigungs-Manöverklassen und Konstantfahrt-Manöverklassen vorgenommen werden.

Für die Beschleunigungs-Manöverklassen erfolgt eine Berechnung der Durchschnittsbeschleunigung. Hierzu werden alle während der Manöverklasse ermittelten Beschleunigungen addiert und anschließend durch die Anzahl der Messwerte dividiert. Zusätzlich wird mit dem Auftreten einer Manöverklasse ein Zähler inkrementiert, um zu bestimmen, wie häufig eine Manöverklasse bisher in der Fahrt aufgetreten ist.

Beim Auftreten einer Konstantfahrtklasse wird statt der Durchschnittsbeschleunigung die Durchschnittsgeschwindigkeit bestimmt. Ebenso wird die Häufigkeit der einzelnen Konstantfahrtklassen bestimmt. Allerdings werden in diesem Fall die beiden charakterisierenden Größen nicht für die auf Grund der gefahrenen Geschwindigkeit detektierte Klasse, sondern für die auf Grundlage der digitalen Karte vor der Fahrt ermittelten Konstantfahrtklasse berechnet. Dies wird im Folgenden anhand eines Beispiels, das in Fig. 6 dargestellt ist, erläutert.

In dem in Fig. 6 gezeigten Bespiel sind zum einem die von der digitalen Karte ausgegebene Geschwindigkeit (gestrichelt) und die gefahrene Fahrzeuggeschwindigkeit (durchgezogen) dargestellt.

Im ersten Schritt sind insgesamt drei Konstantfahrt-Manöverklassen (K1, K2, K3) und drei Beschleunigungs-Manöverklassen (B1, B2, B3) detektiert worden. Für die drei Beschleunigungs-Manöverklassen wird, wie oben beschrieben, die Durchschnittsbeschleunigung ermittelt.

Nun wird zunächst die Konstantfahrtklasse K1 betrachtet. Hier erfolgt analog die Berechnung der Durchschnittsgeschwindigkeit, die anschließend der Konstantfahrt-Manöverklasse $x_1$ zugeordnet wird. Für die Bereiche K2 und K3, in denen ebenfalls Konstantfahrten detektiert worden sind, wird ebenfalls die Durchschnittsgeschwindigkeit ermittelt. Jedoch wird anschließend aus beiden Durchschnittsgeschwindigkeiten eine gemeinsame Durchschnittsgeschwindigkeit berechnet, die der Konstantfahrt-Manöverklasse $x_2$ zugeordnet wird. Diese Zuordnung erfolgt, obgleich auf Grund der gefahrenen Geschwindigkeit im Bereich K3 eigentlich die gleiche Manöverklasse detektiert wird wie im Bereich K1. Für die Zuordnung der Durchschnittsgeschwindigkeiten ist es folglich ausschließlich von Bedeutung, welche Manöverklasse basierend auf den Daten der digitalen Karte ermittelt worden ist, und nicht welche Klasse basierend auf der Start- und Endgeschwindigkeit identifiziert worden ist.

Bei der Berechnung der Durchschnittswerte kann eine Situation gegeben sein, bei der die Geschwindigkeit der digitalen Karte nicht direkt zur Verfügung steht, sondern nur ein berechneter Geschwindigkeitsverlauf. Auf Grundlage dieses Geschwindigkeitsprofils kann jedoch der ursprüngliche Geschwindigkeitsverlauf der digitalen Karte zurückberechnet werden.

In dem Datensatz zur Modulierung des Geschwindigkeitsprofils, wie er gemäß der DE 10 2010 047 080.5 A1 erstellt werden kann, sind für alle Manöver sämtliche benötigten Informationen, wie z.B. Anfangs- und Endgeschwindigkeit, enthalten.

In der nicht vorveröffentlichten DE 10 2012 004 258.2 ist beschrieben wie für die Manöverklassen die Geschwindigkeits- und Beschleunigungswerte, welche in der Manöverklassenmatrix stehen, ermittelt werden können (z.B. $\varnothing v_{Beharrung}$ bei $n_{Beharrung}$). Auf die obigen Ausführungen zur DE 10 2012 004 258.2 wird hier noch einmal verwiesen.

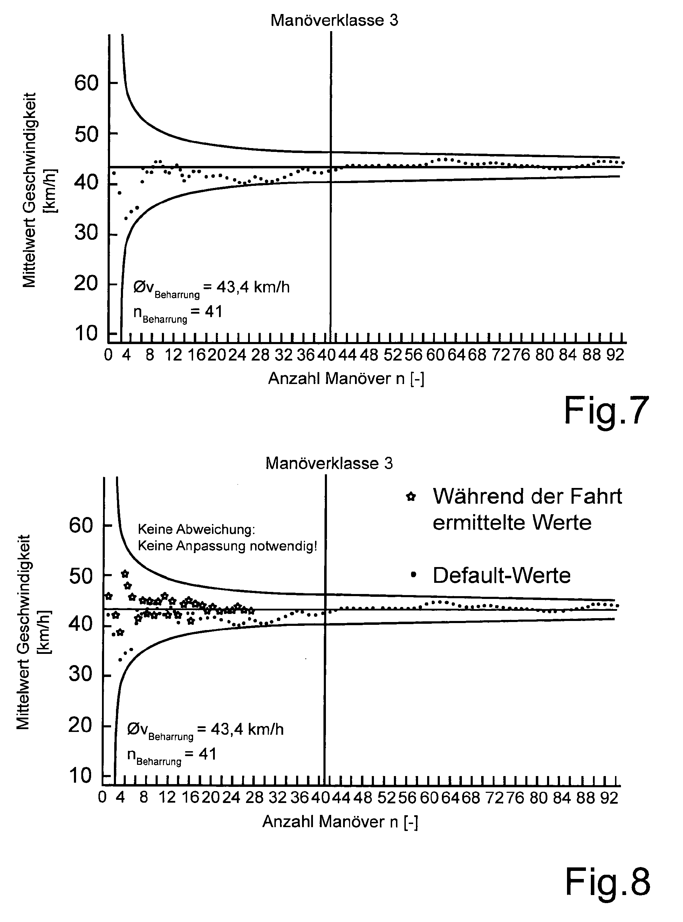

Die Fig. 7 zeigt schematisch eine Darstellung der Berechnung der durchschnittlichen Geschwindigkeit für ein Manöver mit konstanter Geschwindigkeit für eine Manöverklasse mit konstanter Geschwindigkeit gemäß DE 10 2012 004 258.2. Die Werte für die durchschnittliche Geschwindigkeit, die benötigte Anzahl der Wiederholungen zur Erreichung der Beharrung und die Toleranzbänder, beschrieben durch drei Parameter, werden für alle Manöver mit "Default"-Werten für einen "Default"-Fahrer im Fahrzeug in der Manöverklassenmatrix hinterlegt.

Wenn beispielsweise der in der Patentanmeldung DE 10 2010 047 080.5 A1 beschriebene Algorithmus beispielsweise für ein Streckensegment die in Fig. 7 dargestellte Manöverklasse 3 erkennt, wird in dem modulierten Geschwindigkeitsprofil für dieses Streckensegment eine Geschwindigkeit von 43,4 km/h verwendet.

Das bedeutet:

$$v_{Moduliert} = \varnothing v_{Beharrung} = 43,4 \ km/h$$

Diese durch das in der Patentanmeldung DE 10 2012 004 258.2 beschriebene Verfahren ermittelten "Default"-Werte werden durch das hier beschriebene Verfahren online an den jeweiligen Fahrstil angepasst.

Während der Fahrt analysiert der "online"-Geschwindigkeitsklassifikator das tatsächlich gefahrene Geschwindigkeitsprofil. Dabei werden für jede Manöverklasse die durchschnittliche Geschwindigkeit $\varnothing_v$ bzw. durchschnittliche Beschleunigung $\varnothing_a$ in Abhängigkeit der Messwerte n bestimmt.

Die durch den "online"-Geschwindigkeitsklassifikator ermittelten durchschnittlichen (gemittelt über die Anzahl des Auftretens) Geschwindigkeits- und Beschleunigungswerte für die einzelnen Manöverklassen können dann mit den ursprünglichen "Default"-Werten verglichen werden.

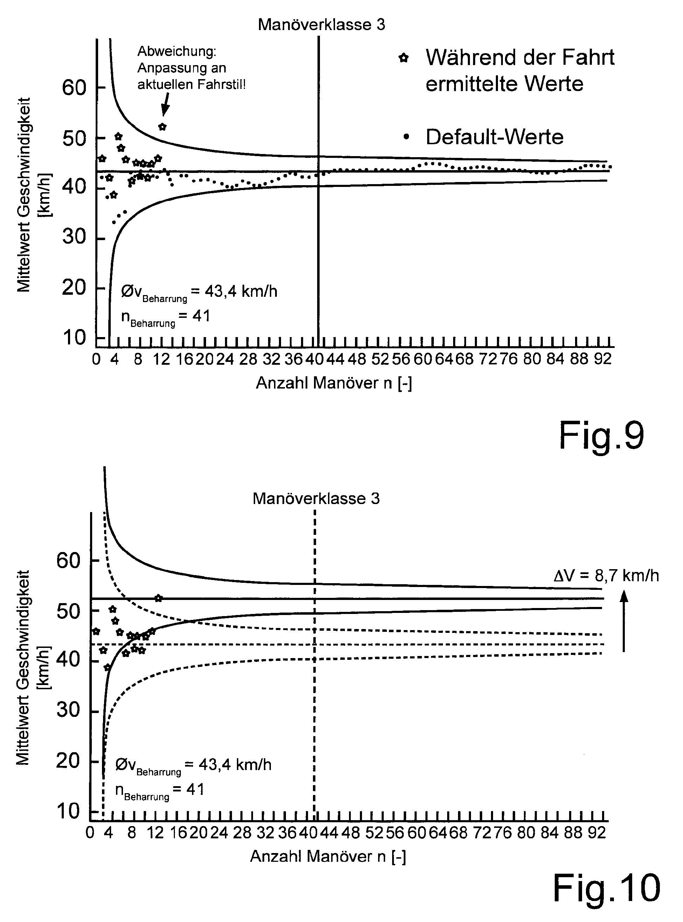

Fig. 8 und Fig. 9 zeigen beispielhaft für eine Manöverklasse, in diesem Fall ein Konstantfahrtmanöver mit $\varnothing v_{Beharrung}$ = 43,4 km/h, wie die während der Fahrt ermittelten Werte mit den "Default"-Werten verglichen werden.

In Fig. 8 ist der Fall dargestellt, dass das aktuelle Fahrverhalten (angezeigt durch Sternchen) für die Manöverklasse 3 charakterisiert durch die durchschnittliche Geschwindigkeit nur geringfügige Abweichungen von dem "Default"-Wert $\varnothing v_{Beharrung}$ (= 43,4 km/h) aufweist. Die aktuellen Werte für die durchschnittliche Geschwindigkeit bei Manöverklasse 3 liegen in diesem Beispiel innerhalb des Toleranzbandes. Deshalb ist keine Anpassung des Fahrstils für die Manöverklasse 3 in der Datenbasis notwendig.

In Fig. 9 ist hingegen der Fall dargestellt, dass das aktuelle Fahrverhalten (angezeigt durch Sternchen) mit der Kenngröße durchschnittliche Geschwindigkeit für n = 13 eine große Abweichung von dem "Default"-Wert $\varnothing v_{Beharrung}$ (= 43,4 km/h) aufweist. Dieser Wert für die durchschnittliche Geschwindigkeit bei Manöverklasse 3 liegt in diesem Beispiel außerhalb des Toleranzbandes. Deshalb ist eine Anpassung an den aktuellen Fahrstil für die Manöverklasse 3 in der Datenbasis notwendig.

Die in den Fig. 8 und Fig. 9 schematisch dargestellte sowie oben beschriebene Auswertung der durchschnittlichen Geschwindigkeit (in Abhängigkeit des Auftretens) während der Fahrt kann zu jedem Fahrtantritt resettet werden. Das bedeutet, dass bei jedem Fahrtantritt die Auswertung der durchschnittlichen Geschwindigkeit von Neuem, also mit n = 1, beginnen kann. Dadurch kann auf jeder Fahrt das aktuelle Fahrverhalten erfasst werden, was wichtig ist, da ein und derselbe Fahrer (z.B. durch Gemütsschwankungen, unterschiedlichen Zeitdruck, unterschiedliche Verkehrsdichte) auch ein unterschiedliches Fahrverhalten aufweisen kann.

Wenn, wie oben beschrieben und in Fig. 9 dargestellt, eine Anpassung für ein Manöver in der Datenbasis notwendig ist, wird in vorteilhafter Weise ein Offset-Wert $\Delta v$ (dieser besitzt in der Default-Manöverklassenmatrix für alle Manöverklassen konstanter Geschwindigkeit den "Default"-Wert $\Delta b = 0$) in die Manöverklassenmatrix geschrieben.

In dem in Fig. 9 und Fig. 10 dargestellten Beispiel wäre das fahrertypische Geschwindigkeitsoffset $\Delta v = 8{,}7$ km/h. Daraus ergibt sich bei einer anschließenden Modulation eines Geschwindigkeitsprofils für die Manöverklasse 3 folgende zu verwendende Geschwindigkeit:

$$v_{Moduliert} = \varnothing v_{Beharrung} + \Delta v = 43{,}4 \text{ km/h} + 8{,}7 \text{ km/h} = 52{,}1 \text{ km/h}$$

Der Vorteil, die fahrstilabhängige Veränderung als Offset und nicht als Absolutwert in der Manöverklassenmatrix zu erfassen, liegt darin, dass eine Möglichkeit besteht die Manöverklassenmatrix wieder auf die "Default"-Bedatung zu resetten und das Erlernte zu verwerfen, wenn erkannt wird, dass das Erlernte fehlerhaft oder überholt ist.

Bei der Speicherung von Absolutwerten müsste die "Default"-Bedatung überschrieben werden und es wäre keine Resetierung der Datenbasis möglich. Oder es wäre eine Resetierung der Datenbasis nur durch separate Abspeicherung der Default-Manöverklassenmatrix möglich, was jedoch doppelten Speicherbedarf (beispielsweise in einem Steuergerät) verursacht. Je nach Anwendungsfall können erfindungsgemäß jedoch beide Verfahren zu Anwendung kommen (Speicherung eines Offsets oder von Absolutwerten; mit und ohne separate Abspeicherung der Default-Manöverklassenmatrix).

Die Verschiebung der Toleranzbänder erfolgt ebenfalls durch Addition des Offsets $\Delta v$. Grundsätzlich wird für jede Manöverklasse die Kurve, welche die obere Grenze des Toleranzbandes darstellt, durch folgende Gleichung 1 beschrieben:

$$T = \frac{1}{a \text{ x } n + b} + c$$

(Gleichung 1; formaler Zusammenhang zur Beschreibung der oberen Grenze des Toleranzbandes)

Die Parameter a, b und c können dann für jede Manöverklasse spezifisch ausgewählt und in der Manöverklassenmatrix abgelegt werden. Die untere Grenze des Toleranzbandes erhält man durch Spiegelung der oberen Grenze an der Geraden von $\varnothing v_{Beharrung}$.

Die Verschiebung des Toleranzbandes ergibt sich durch Addition des ursprünglichen Wertes des Parameters c und dem fahrstilabhängigen Offset $\Delta v$. Wenn $\Delta v \neq 0$ ist, verändert sich obige Formel für die obere Grenze des Toleranzbandes wie folgt:

$$T = \frac{1}{a \text{ x } n + b} + c + \Delta v$$

(Gleichung 2; formaler Zusammenhang zur Verschiebung des Toleranzbandes bei stationären Fahrmanövern)

Auch bei der Beschreibung der Verschiebung des Toleranzbandes durch das Offset $\Delta v$ ergibt sich der Vorteil, dass das während der Fahrt angelernte Fahrverhalten resettet werden kann. Wenn bei einer Manöverklasse eine Offsetverschiebung der Geschwindigkeit inklusive Toleranzband vorliegt, kann auch die in Fig. 8 und Fig. 9 beschriebene Auswertung am verschobenen Toleranzband fortgesetzt oder bei dem nächsten Fahrtantritt mit den "Default"-Werten begonnen werden.

Zur Erfassung des Fahrstils bei instationären Fahrmanövern (Beschleunigungs- und Verzögerungsmanöver) kann das gleiche Verfahren angewendet werden, wie bei den stationären Manövern. Dies ist möglich, da die instationären Manöver durch die gleichen "Default"-Werte charakterisiert werden wie die Konstantfahrtmanöver. Der einzige Unterschied zwischen stationären und instationären Manöverklassen besteht darin, dass es sich um Beschleunigungs- bzw. Verzögerungswerte ($\varnothing a$) anstatt um Geschwindigkeitswerte ($\varnothing v$) handelt.

Bei instationären Manövern wird die durchschnittliche Beschleunigung bzw. Verzögerung ebenfalls in Abhängigkeit der Wiederholungen (n) für einen "Default"-Fahrer ermittelt und in der Datenbasis (Default-Manöverklassenmatrix) hinterlegt. Auch die Toleranzbänder werden analog zum Verfahren bei stationären Manövern durch drei Parameter (vgl. Gleichung 1) beschrieben und in der Manöverklassenmatrix abgelegt.

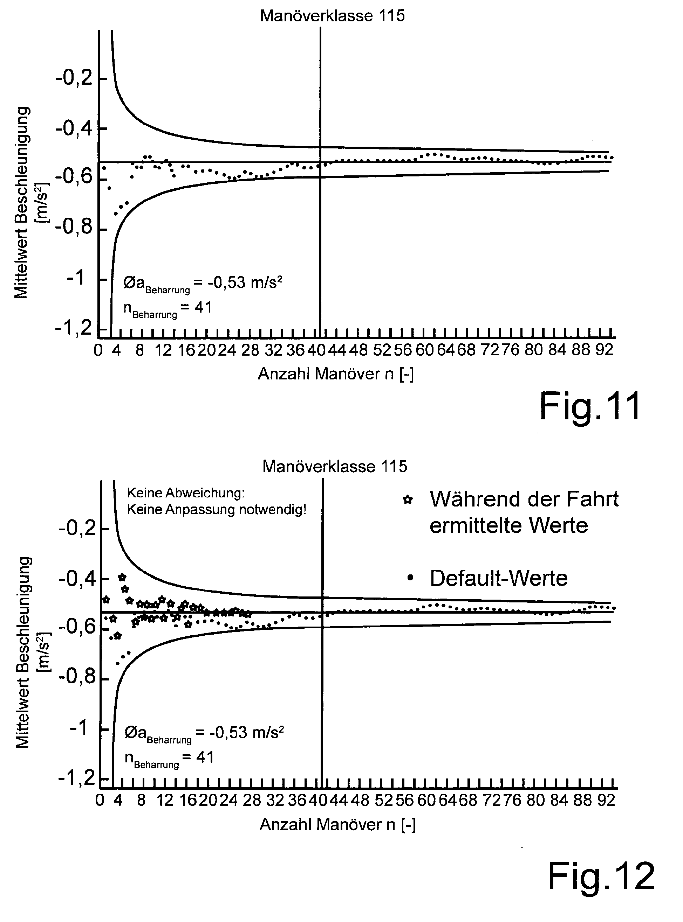

Fig. 11 zeigt schematisch für ein Verzögerungsmanöver die Ermittlung der durchschnittlichen Verzögerung in Abhängigkeit der Wiederholungen. Das Verfahren ist in der Patentanmeldung DE 10 2012 004 258.2 beschrieben.

Dadurch, dass die instationären Manöver durch die gleichen Werte beschrieben werden wie die stationären Manöver, ist der gleiche Auswertealgorithmus verwendbar.

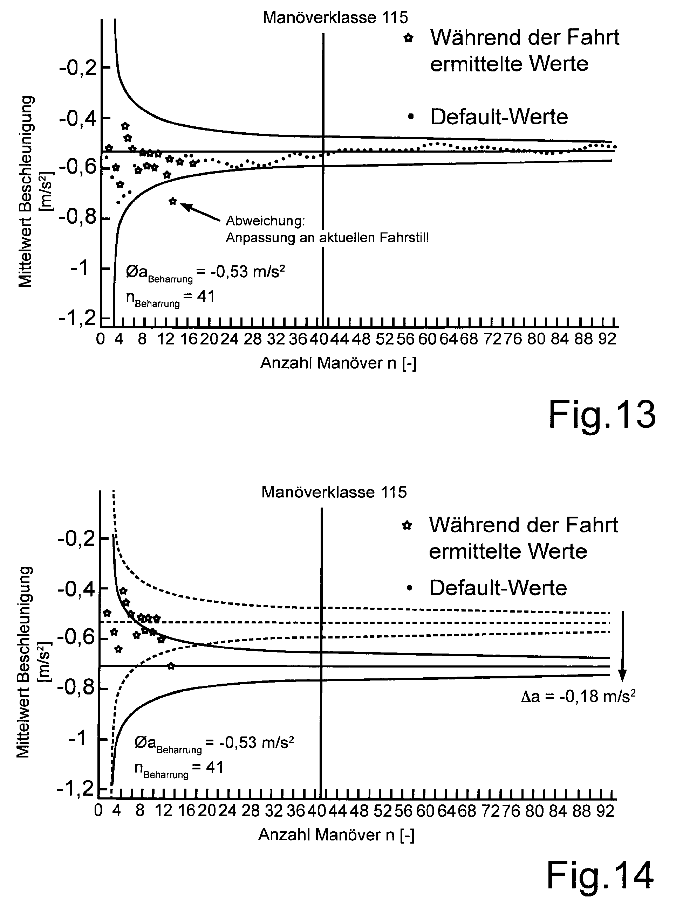

Das bedeutet, dass die während der Fahrt ermittelte Beschleunigungs- und Verzögerungswerte des Fahrers genauso mit den "Default"-Werten verglichen werden können, wie dies bei den Konstantfahrtmanövern der Fall ist. Beispielhaft ist dies für die Manöverklasse 115 in Fig. 12 und Fig. 13 dargestellt.

Wie bereits oben für die Konstantfahrtmanöver beschrieben, lässt sich das aktuelle Fahrverhalten im Vergleich zum ursprünglich in der Manöverklassenmatrix hinterlegten Verhalten auswerten. So zeigt Fig. 12 beispielhaft, dass die online ermittelten aktuellen Verzögerungswerte für die Manöverklasse 115 nur geringfügig von den ursprünglichen Werten abweichen und keine Anpassung des Fahrstils in der Manöverklassenmatrix notwendig ist. Fig. 13 hingegen zeigt exemplarisch den Fall, dass die online ermittelten Verzögerungswerte für die Manöverklasse 115 für n = 13 deutlich abweichen und das Toleranzband verletzen. In diesem Fall ist eine Anpassung der Daten für die Manöverklasse 115 an den aktuellen Fahrstil erforderlich.

Die in der Fig. 12 und Fig. 13 schematisch dargestellte Auswertung der durchschnittlichen Beschleunigung bzw. Verzögerung (in Abhängigkeit des Auftretens) während der Fahrt kann zu jedem Fahrtantritt resettet werden. Das bedeutet, dass bei jedem Fahrtantritt die Auswertung der durchschnittlichen Beschleunigung bzw. Verzögerung von Neuem, also mit n = 1, beginnen kann. Dadurch kann auf jeder Fahrt das aktuelle Fahrverhalten erfasst werden, was wichtig ist, da ein und derselbe Fahrer (z.B. durch Gemütsschwankungen, unterschiedlichen Zeitdruck, unterschiedliche Verkehrsdichte) auch ein unterschiedliches Fahrverhalten aufweisen kann.

Wie sich die durchschnittliche Beschleunigung bzw. Verzögerung durch den aktuellen Fahrstil verschieben kann, zeigt Fig. 14. Es werden auch dabei für instationäre Manöverklassen die gleichen Zusammenhänge verwendet, wie für Manöverklassen mit konstanter Geschwindigkeit. Das bedeutet, dass der Default-Wert für $\varnothing a_{Beharrung}$ in der Manöverklassenmatrix nicht verändert werden muss, sondern der aktuelle Wert für $\Delta a$ in die Manöverklassenmatrix geschrieben werden kann. Der "Default"-Wert für $\Delta a$ beträgt in der Default-Manöverklassenmatrix für alle instationären Manöverklassen 0.

In dem hier dargestellten Beispiel (siehe Fig. 13 und Fig. 14) ergibt sich für die Manöverklasse 115 folgender formaler Zusammenhang:

$$a_{Moduliert} = \varnothing a_{Beharrung} + \Delta a = -0{,}53 \text{ m/s}^2 - 0{,}18 \text{ m/s}^2 = -0{,}71 \text{ m/s}^2$$

Das bedeutet, dass bei der nächsten Geschwindigkeitsmodulation, bei der die Manöverklasse 115 vorkommt, eine Verzögerung von 0,71 m/s$^2$ anstatt der ursprünglichen 0,53 m/s$^2$ verwendet wird.

Das Toleranzband wird für instationäre Manöver durch den gleichen formalen Zusammenhang beschrieben wie für stationäre Manöverklassen, vgl. Gleichung 1. Ist bei einer instationären Manöverklasse eine Anpassung an das aktuelle Fahrverhalten notwendig, so muss auch das Toleranzband verschoben werden. Dazu wird bei den instationären Manöverklassen der gleiche Ansatz wie bei den stationären Manöverklassen verwendet. Der formale Zusammenhang zur Verschiebung des Toleranzbandes bei den instationären Manöverklassen ergibt sich dann folgendermaßen:

$$T = \frac{1}{a \times n + b} + c + \Delta a$$

(Gleichung 3; formaler Zusammenhang zur Verschiebung des Toleranzbandes bei instationären Fahrmanövern)

Wenn bei einer instationären Manöverklasse eine Offsetverschiebung der Beschleunigung bzw. Verzögerung inklusive Toleranzband vorliegt, kann auch die in Fig. 12 und Fig. 13 beschriebene Auswertung am verschobenen Toleranzband fortgesetzt bzw. bei dem nächsten Fahrtantritt wieder mit den Default-Werten begonnen werden.

Für den Fall, dass durch die Anpassung der Werte von wenigstens einer Manöverklasse ein vorgebbarer Schwellenwert für eine energetische Relevanz überschritten wird, wird in vorteilhafter Weise eine Neuberechnung der prädiktiven Betriebsstrategie für das Fahrzeug durchgeführt. Für den Schwellenwert bestehen keine besonderen Beschränkungen und eine "energetische Relevanz" kann zum Beispiel angenommen werden, wenn der Energieverbrauch über die ausgewählte Strecke aufgrund des aktuellen Fahrstils des Fahrers um 1, 2, 3, 4, 5, 6, 7, 8, 9, 10, 15 oder 20 % über oder unter dem liegt, der aufgrund der "default" Werte in der Manöverklassenmatrix für eine ausgewählte Strecke vorherberechnet wurde.

Die vorliegende Erfindung umfasst auch ein Steuergerät für ein Fahrzeug, das dazu eingerichtet ist, die oben beschriebene fahrerspezifische Anpassung eines synthetisch modulierten Geschwindigkeitsprofils in allen seinen Ausführungsformen durchzuführen. Dieses Steuergerät kann dasjenige sein, das für die Adaption der verkehrsflussbedingten Anhaltevorgänge verwendet wird, oder ein hiervon verschiedenes Steuergerät. Da sich die für das Steuergerät erforderlichen Komponenten, deren Funktion und Zusammenwirken für einen Fachmann aus den obigen Ausführungen ohne weiteres ergeben, braucht diesbezüglich hier nicht näher darauf eingegangen zu werden.

Das Steuergerät zur Durchführung der fahrerspezifischen Anpassung eines synthetisch modulierten Geschwindigkeitsprofils kann beispielsweise eine Speichereinrichtung, eine Bedienvorrichtung, eine Datenverarbeitungseinrichtung sowie eine Messdatenerfassungseinrichtung aufweisen, wobei

a) in der Speichereinrichtung eine Mehrzahl von Manöverklassen gespeichert ist, wobei für jede Manöverklasse wenigstens eine Eingangsgeschwindigkeit, ein Ausgangsgeschwindigkeit, eine Durchschnittsgeschwindigkeit oder Durchschnittsbeschleunigung des Fahrzeugs sowie ein Toleranzband für die Durchschnittsgeschwindigkeit oder Durchschnittsbeschleunigung in Abhängigkeit von der Anzahl der Wiederholungen des Manövers gespeichert sind;
b) mittels der Bedienvorrichtung eine Route auswählbar ist, wobei die hierfür erforderlichen Strecken entweder in der Speichereinrichtung gespeichert sind oder auf Kartendaten eines Navigationssystems beruhen;
c) mittels der Datenverarbeitungseinrichtung zumindest eine Manöverklasse zu jedem Streckensegment der Route zuweisbar ist;
d) mittels der Messdatenerfassungseinrichtung erfasst werden kann, mit welcher tatsächlichen Geschwindigkeit oder tatsächlichen Beschleunigung ein Fahrer die Streckensegmente durchfährt;
e) mittels der Datenverarbeitungseinrichtung verglichen werden kann, ob die tatsächliche Geschwindigkeit oder die tatsächliche Beschleunigung bezogen auf die Anzahl, wie oft die Manöverklasse vorgekommen ist, außerhalb des für die Anzahl der Manöverklasse in der Speichereinrichtung hinterlegten Toleranzbandes liegt, und
f) mittels der Datenverarbeitungseinrichtung die in der Speichereinrichtung für die Manöverklasse gespeicherte Durchschnittsgeschwindigkeit oder Durchschnittsbeschleunigung sowie das Toleranzband angepasst werden kann, sofern die tatsächliche Geschwindigkeit oder die tatsächliche Beschleunigung bezogen auf die Anzahl, wie oft die Manöverklasse vorgekommen ist, außerhalb des für die Manöverklasse in der Speichereinrichtung hinterlegten Toleranzbandes liegt.

Des Weiteren kann in vorteilhafter Weise vorgesehen sein, dass durch die im Steuergerät vorgesehen Datenverarbeitungseinrichtung eine Anpassung der Werte für eine Manöverklasse durch Eintragung von Offset-Werten in die Speichereinrichtung erfolgt. Weiter kann in vorteilhafter Weise durch die Datenverarbeitungseinrichtung eine Neuberechnung der Betriebsstrategie durchgeführt werden, sofern durch die Anpassung der Werte von wenigstens einer Manöverklasse ein vorgebbarer Schwellenwert für eine energetische Relevanz überschritten wird.

Auch können durch die Datenverarbeitungseinrichtung a) die angepassten Werte für die Berechnung der prädiktiven Betriebsstrategie für wenigstens eine weitere ausgewählte Strecke verwendet werden, oder b) die angepassten Werte in der Manöverklassenmatrix nach Beendigung der Fahrt auf die ursprünglich vorgegebenen Werte zurückgesetzt werden und die Berechnung der prädiktiven Betriebsstrategie für eine weitere ausgewählte Strecke auf Grundlage der ursprünglich vorgegebenen Werte erfolgen.

## Patentansprüche

1. Verfahren zur verkehrsflussbedingten Adaption von Anhaltevorgängen an ein synthetisch moduliertes Geschwindigkeitsprofil entlang einer mit einem Fahrzeug gefahrenen Strecke mit den Schritten

a) Auswählen einer Strecke auf Grundlage von in einem Datensatz gespeicherten Kartendaten (S1),
b) Aufteilen der Strecke in Streckensegmente und Erzeugen eines synthetisch modulierten Geschwindigkeitsverlaufs für jedes Streckensegment (S2),
c) Abfahren von wenigstens einem Teil der Strecke durch einen Fahrer mit dem Fahrzeug (S3),
d) Erfassen, wie oft und wie lange das Fahrzeug beim Befahren von wenigstens einem Teil der ausgewählten Strecke in den befahrenen Streckensegmenten anhält (S4), und
e) Adaption von wenigstens einem synthetisch modulierten Geschwindigkeitsverlauf für wenigstens ein Streckensegment an die erfassten Anhaltevorgänge (S5);

**dadurch gekennzeichnet, dass**
in Schritt b) jedem Streckensegment eine Manöverklasse zugeordnet wird, wobei die Manöverklassen auswählbar sind aus einer vorgegebenen Manöverklassenmatrix, in der eine Anzahl an Konstantfahrt-Manöverklassen, Beschleunigungs-Manöverklassen und Verzögerungs-Manöverklassen enthalten ist und für jede Manöverklasse wenigstens eine Eingangsgeschwindigkeit und eine Ausgangsgeschwindigkeit des Fahrzeugs enthalten ist, und wobei in der Manöverklassenmatrix für jede Manöverklasse weiter wenigstens eine Durchschnittsgeschwindigkeit oder Durchschnittsbeschleunigung des Fahrzeugs sowie ein Toleranzband für die Durchschnittsgeschwindigkeit oder Durchschnittsbeschleunigung in Abhängigkeit von der Anzahl, wie oft die Manöverklasse vorkommt, enthalten sind.

2.  Verfahren gemäß Anspruch 1,
    wobei, sofern für das Streckensegment, innerhalb dessen das Fahrzeug anhält, gemäß der Zuordnung der Manöverklasse zu dem Streckenabschnitt

    a) eine Konstantfahrt-Manöverklasse gegeben ist, die Anhaltedauer der Konstantfahrt-Manöverklasse,
    b) eine Verzögerungs-Manöverklasse gegeben ist, die Anhaltedauer der vor der Verzögerungs-Manöverklasse aufgetretenen Konstantfahrt-Manöverklasse, oder
    c) eine Beschleunigungs-Manöverklasse gegeben ist, die Anhaltedauer der nach der Beschleunigungs-Manöverklasse aufgetretenen Konstantfahrt-Manöverklasse

    zugeordnet wird.

3.  Verfahren gemäß Anspruch 1 oder 2,
    wobei die Anhaltedauer für jeden Anhaltevorgang in einem Zeitspeicher abgelegt und ein manöverklassenspezifischer Zähler für die Anhaltevorgänge um den Wert 1 erhöht wird.

4.  Verfahren gemäß einem der Ansprüche 1 bis 3,
    wobei die adaptierten Werte von wenigstens einem synthetisch modulierten Geschwindigkeitsverlauf für wenigstens ein Streckensegment für die prädiktive Betriebsstrategie für das Fahrzeug verwendet werden.

5.  Verfahren gemäß Anspruch 4,
    wobei für den Fall, dass sich aufgrund der adaptierten Werte von wenigstens einem synthetisch modulierten Geschwindigkeitsverlauf für wenigstens ein Streckensegment ergibt, dass ein vorgebbarer Schwellenwert für eine energetische Relevanz überschritten wird, eine Neuberechnung der prädiktiven Betriebsstrategie für das Fahrzeug durchgeführt wird.

6.  Verfahren gemäß Anspruch 4 oder 5,
    wobei die adaptierten Werte

    a) für wenigstens ein Streckensegment für die Berechnung der prädiktiven Betriebsstrategie für wenigstens eine weitere ausgewählte Strecke verwendet wird, oder
    b) für wenigstens ein Streckensegment nach Beendigung der Fahrt auf die ursprünglich vorgegebenen Wert zurückgesetzt werden und die Berechnung der prädiktiven Betriebsstrategie für eine weitere ausgewählte Strecke auf Grundlage der ursprünglich vorgegebenen Werte erfolgt.

7.  Steuergerät für ein Fahrzeug, das dazu eingerichtet ist, eines der Verfahren gemäß den Ansprüchen 1 bis 6 durchzuführen.


**Claims**

1.  Method for adapting stopping procedures depending on traffic flow to a synthetically modulated speed profile along a route driven with a vehicle, having the steps

    a) selecting a route on the basis of map data stored in a data set (S1),
    b) dividing the route into route segments and generating a synthetically modulated speed curve for each route segment (S2),
    c) departing at least one part of the route by a driver with the vehicle (S3),

d) detecting how often and how long the vehicle stops when traversing at least one part of the selected route in the traversed route segments (S4), and

e) adapting at least one synthetically modulated speed curve for at least one route segment to the detected stopping procedures (S5);

**characterised in that**

in step b), a manoeuvre class is allocated to each route segment, wherein the manoeuvre classes are able to be selected from a predetermined manoeuvre class matrix in which a number of steady speed manoeuvre classes, acceleration manoeuvre classes and deceleration manoeuvre classes is contained and at least one entry speed and one exit speed of the vehicle is contained for each manoeuvre, and

wherein at least one average speed or average acceleration of the vehicle as well as a tolerance band for the average speed or average acceleration are further contained in the manoeuvre class matrix for each manoeuvre class depending on the number of how often the manoeuvre class occurs.

2. Method according to Claim 1,
wherein if, for the route segment within which the vehicle stops, according to the allocation of the manoeuvre class to the route segment,

a) a steady speed manoeuvre class is provided, the stopping duration is allocated to the steady speed manoeuvre class,

b) a deceleration manoeuvre class is provided, the stopping duration is allocated to the steady speed manoeuvre class which occurred before the deceleration manoeuvre class, or

c) an acceleration manoeuvre class is provided, the stopping duration is allocated to the steady speed manoeuvre class which occurred after the acceleration manoeuvre class.

3. Method according to Claim 1 or 2,
wherein the stopping duration for each stopping procedure is deposited in a time memory and a manoeuvre class-specific counter for the stopping procedures is increased by the value 1.

4. Method according to any one of Claims 1 to 3,
wherein the adapted values of at least one synthetically modulated speed curve for at least one route segment are used for the predictive operating strategy for the vehicle.

5. Method according to Claim 4,
wherein in the case that, due to the adapted values of at least one synthetically modulated speed curve for at least one route segment, it results that a predeterminable threshold value for an energy relevance is exceeded, a recalculation of the predictive operating strategy for the vehicle is implemented.

6. Method according to Claim 4 or 5,
wherein the adapted values

a) for at least one route segment are used for the calculation of the predictive operating strategy for at least one further selected route, or

b) for at least one route segment are reset to the originally predetermined value after the end of the drive and the calculation of the predictive operating strategy for a further selected route occurs on the basis of the originally predetermined values.

7. Control device for a vehicle which is equipped to implement the method according to Claims 1 to 6.

**Revendications**

1. Procédé d'adaptation, imposée par la fluidité du trafic, de procédures d'arrêt à un profil de vitesse modulé de manière synthétique le long d'un trajet parcouru par un véhicule avec les étapes de

a) sélection d'un trajet sur la base de données cartographiques enregistrées dans un enregistrement (S1),

b) découpage du trajet en segments de trajet et génération d'une courbe de vitesse modulée de manière synthétique pour chaque segment de trajet (S2),

c) parcours d'au moins une partie du trajet par un conducteur avec le véhicule (S3),

d) saisie du nombre et de la durée des arrêts du véhicule lorsqu'il parcourt au moins une partie du trajet sélectionné dans les segments de trajet parcourus (S4), et

e) adaptation d'au moins une courbe de vitesse modulée de manière synthétique pour au moins un segment de trajet aux procédures d'arrêt saisies (S5) ;

**caractérisé en ce que**

dans l'étape b) une classe de manoeuvre est attribuée à chaque segment de trajet, dans lequel les classes de manoeuvre sont sélectionnables parmi une matrice de classe de manoeuvre prédéfinie, dans laquelle un nombre de classes de manoeuvre de déplacement constant, de classe de manoeuvre d'accélération et de classe de manoeuvre de décélération est contenu et pour chaque classe de manoeuvre au moins une vitesse d'entrée et une vitesse de sortie du véhicule sont contenues, et

dans lequel, dans la matrice de classe de manoeuvre, au moins une vitesse moyenne ou une accélération moyenne du véhicule ainsi qu'une bande de tolérance pour la vitesse moyenne ou l'accélération moyenne en fonction du nombre de fois que la classe de manoeuvre survient sont contenues en outre pour chaque classe de manoeuvre.

2.  Procédé selon la revendication 1,
    dans lequel, si pour le segment de trajet, à l'intérieur duquel le véhicule s'arrête, conformément à l'affectation de la classe de manoeuvre à la section de trajet

    a) une classe de manoeuvre de déplacement constant est donnée, la durée d'arrêt de la classe de manoeuvre de déplacement constant est attribuée,
    b) une classe de manoeuvre de décélération est donnée, la durée d'arrêt de la classe de manoeuvre de déplacement constant survenue avant la classe de manoeuvre de décélération est attribuée,
    c) une classe de manoeuvre d'accélération est donnée, la durée d'arrêt de la classe de manoeuvre de déplacement constant survenue après la classe de manoeuvre d'accélération est attribuée.

3.  Procédé selon la revendication 1 ou 2,
    dans lequel la durée d'arrêt pour chaque procédure d'arrêt est déposée dans une mémoire de temps et un compteur spécifique à la classe de manoeuvre pour les procédures d'arrêt est augmenté de la valeur 1.

4.  Procédé selon l'une quelconque des revendications 1 à 3,
    dans lequel les valeurs adaptées d'au moins une courbe de vitesse modulée de manière synthétique pour au moins un segment de trajet sont utilisées pour la stratégie de fonctionnement prédictive pour le véhicule.

5.  Procédé selon la revendication 4,
    dans lequel, pour le cas où il résulte en raison des valeurs adaptées d'au moins une courbe de vitesse modulée de manière synthétique pour au moins un segment de trajet et pour le cas où la valeur de seuil predéfinissable pour une pertinence énergétique est dépassée, un recalcul de la stratégie de fonctionnement prédictive pour le véhicule est réalisé.

6.  Procédé selon la revendication 4 ou 5,
    dans lequel les valeurs adaptées

    a) pour au moins un segment de trajet sont utilisées pour le calcul de la stratégie de fonctionnement prédictive pour au moins un autre trajet sélectionné, ou
    b) pour au moins un segment de trajet sont réinitialisées à la valeur initialement prédéfinie après la fin du déplacement et le calcul de la stratégie de fonctionnement prédictive pour un autre trajet sélectionné se fait sur la base des valeurs initialement prédéfinies.

7.  Appareil de commande pour un véhicule qui est conçu pour effectuer un des procédés selon les revendications 1 à 6.

Fig.1

-- Geschwindigkeit der digitalen Karte

— Fahrzeuggeschwindigkeit

Definition Anhaltevorgang

Fig.2

Geschwindigkeit

90

60
50

Strecke

⑪ ③ ㉑
Manöverklassen

Fig.3

Geschwindigkeit

90

60
50

Rückrechnungsprofil

Strecke

⑪ ③ ㉑
Manöverklassen

Fig.4

Geschwindigkeit

90

60
50

Rückrechnungsprofil
(Offset verschoben)

Offset

Strecke

Manöverklassen

③ ④ ③ ⑤ ③

# Fig.5

Geschwindigkeit

K1  B1  K2  B2 B3  K3

$x_2$

$x_1$

Zeit

- - Geschwindigkeit der digitalen Karte
— Fahrzeuggeschwindigkeit

# Fig.6

Fig.7

Fig.8

Fig.9

Fig.10

Manöverklasse 115

$\varnothing a_{Beharrung} = -0,53 \ m/s^2$

$n_{Beharrung} = 41$

Anzahl Manöver n [-]

# Fig.11

Manöverklasse 115

Keine Abweichung:
Keine Anpassung notwendig!

✿ Während der Fahrt
ermittelte Werte

• Default-Werte

$\varnothing a_{Beharrung} = -0,53 \ m/s^2$

$n_{Beharrung} = 41$

Anzahl Manöver n [-]

# Fig.12

Fig.13

Fig.14

**IN DER BESCHREIBUNG AUFGEFÜHRTE DOKUMENTE**

**In der Beschreibung aufgeführte Patentdokumente**

- DE 102008035944 A1
- DE 102007036794 A1
- DE 102008010558 A1
- US 20110005486 A1
- DE 102010047080 A1

- DE 102012004258
- DE 1020100470805A1